# EUROPEAN PATENT APPLICATION

(11) **EP 3 661 315 A1**
(43) Date of publication of application: **03.06.2020**
(21) Application number: 18845793.1
(22) Date of filing: 24.05.2018
(51) Int. Cl.: H04W 76/00

(54) **COMMUNICATION METHOD, APPARATUS AND SYSTEM**

(30) Priority: 15.08.2017 CN 201710699045
(71) Applicant: Huawei Technologies Co., Ltd., Longgang District Shenzhen, Guangdong 518129 (CN)
(72) Inventor: YING, Jiangwei, Shenzhen Guangdong 518129 (CN); YANG, Yanmei, Shenzhen Guangdong 518129 (CN); DENG, Qiang, Shenzhen Guangdong 518129 (CN); HUANG, Zhenglei, Shenzhen Guangdong 518129 (CN)
(74) Representative: Epping - Hermann - Fischer
(86) International application number: PCT/CN2018/088280
(87) International publication number: WO 2019/033817

(57) **Abstract**

This application discloses a communication method, an apparatus, and a system, and relates to the communications field, to help a terminal device in an RRC-inactive state perform a mobility-triggered TAU. The method includes: when a TAI of a location of a terminal device in a radio resource control RRC-inactive state does not belong to a tracking area list TAL of the terminal device, switching, by the terminal device, to a connection management CM idle state; sending, by the terminal device, a registration request message to an access and mobility management function AMF by using a target radio access network RAN node, where the registration request message is used to request to allocate a TAL to the terminal device; and receiving, by the terminal device by using the target RAN node, a registration accept message sent by the AMF, where the registration accept message includes the allocated TAL. Embodiments of this application are applied to a scenario in which the terminal device moves between registration areas.

## Description

This application claims priority to Chinese Patent Application No. 201710699045.6, filed with the Chinese Patent Office on August 15, 2017 and entitled "COMMUNICATION METHOD, APPARATUS, AND SYSTEM", which is incorporated herein by reference in its entirety.

### TECHNICAL FIELD

This application relates to the communications field, and in particular, to a communication method, an apparatus, and a system.

### BACKGROUND

The 5th generation (5th Generation, 5G) specification defines a radio resource control (Radio Resource Control, RRC) inactive state (RRC-inactive state), and the state is an RRC state (state) of a terminal device. In the RRC-inactive state, an RRC connection between the terminal device and a radio access network (Radio Access Network, RAN) node has been released, but a connection between the RAN node and a core network (Core Network, CN) node is maintained.

For ease of location management, concepts of a tracking area (Tracking Area, TA) and a tracking area list (Tracking Area List, TAL) are introduced in long term evolution (Long Term Evolution, LTE). The TA is used to indicate a location of an area in which the terminal device is located, and each TA may be represented by using a tracking area identity (Tracking Area Identity, TAI). The TAL is used to indicate a registration area of the terminal device, and the TAL includes TAIs of one or more TAs. When moving in an area defined by a same TAL, the terminal device does not need to perform a tracking area update (Tracking Area Update, TAU), and the terminal device performs a TAU only when moving out of the area defined by the TAL, thereby avoiding frequent TA updates caused by a ping-pong effect at a TA boundary.

In the existing 5G specification, a terminal device in an idle state or a connected state may update a TAL through a periodic TAU or a mobility-triggered TAU. The mobility-triggered TAU is a TAU caused by that, when the terminal device moves out of an area corresponding to the TAL, a TAI of a location of the terminal device does not belong to the TAL already allocated to the terminal device. However, the 5G specification does not provide a description of how a terminal device in an RRC-inactive state performs a mobility-triggered TAU and how a RAN node and a CN node specifically perform the procedure.

### SUMMARY

Embodiments of this application provide a communication method, an apparatus, and a system, to help a terminal device in an RRC-inactive state perform a mobility-triggered TAU.

To achieve the foregoing objectives, the following technical solutions are used in the embodiments of this application.

According to a first aspect, an embodiment of this application provides a communication method. The method includes: when a TAI of a location of a terminal device in a radio resource control RRC-inactive state does not belong to a tracking area list TAL of the terminal device, switching, by the terminal device, to a connection management CM idle state; sending, by the terminal device, a registration request message to an access and mobility management function AMF by using a target radio access network RAN node, where the registration request message is used to request to allocate a TAL to the terminal device; and receiving, by the terminal device by using the target RAN node, a registration accept message sent by the AMF, where the registration accept message includes the allocated TAL. According to the communication method provided in this embodiment of this application, when the TAI of the location of the terminal device in the RRC-inactive state does not belong to the TAL of the terminal device, it indicates that the terminal device has moved out of an area defined by the TAL of the terminal device. In this case, the terminal device switches to the CM idle state, and the terminal device sends the registration request message to the AMF to request to allocate the TAL to the terminal device at the current location. The AMF sends an N2 user equipment context release command message to a source RAN node, to release a context of the terminal device that is stored in the source RAN node. After receiving, from the source RAN node, a response message of releasing the context, the AMF sends the registration accept message to the terminal device by using the target RAN node. The registration accept message includes the TAL allocated to the terminal device. According to the foregoing embodiment, the terminal device in the RRC-inactive state performs a mobility-triggered TAU.

In an implementation scenario, an area corresponding to the TAI of the location of the terminal device is a non-allowed area, and an area corresponding to the tracking area list TAL is an allowed area. This implementation indicates that the terminal device moves from the allowed area to the non-allowed area.

According to a second aspect, an embodiment of this application provides a terminal device. The terminal device includes: a switching unit, configured to: when a TAI of a location of the terminal device in a radio resource control RRC-inactive state does not belong to a tracking area list TAL of the terminal device, switch the terminal device to a connection management CM idle state; a sending unit, configured to send a registration request message to an access and mobility management function AMF by using a target radio access network RAN node, where the registration request message is used to request to allocate a TAL to the terminal device; and a receiving unit, configured to receive, by using the target RAN node, a registration accept message sent by the AMF, where the registration accept message includes the allocated TAL. Based on a same inventive concept, for a problem-resolving principle and beneficial effects of the terminal device, refer to the first aspect, the possible method implementations of the first aspect, and brought beneficial effects. Therefore, for implementation of the terminal device, refer to the first aspect and the possible method implementations of the first aspect. Details are not repeated.

According to a third aspect, an embodiment of this application provides a communication method. The method includes: receiving, by an access and mobility management function AMF, a registration request message from a target radio access network RAN node, where the registration request message is used to request to allocate a tracking area list TAL to a terminal device, and the terminal device is in a radio resource control RRC-inactive state; sending, by the AMF, an N2 user equipment context release command message to a source RAN node; receiving, by the AMF, an N2 user equipment context release complete message sent by the source RAN node; and sending, by the AMF, a registration accept message to the terminal device by using the target RAN node, where the registration accept message includes the TAL. According to the communication method provided in this embodiment of this application, when a TAI of a location of the terminal device in the RRC-inactive state does not belong to a TAL of the terminal device, it indicates that the terminal device has moved out of an area defined by the TAL of the terminal device. In this case, the terminal device switches to a CM idle state, and the terminal device sends the registration request message to the AMF to request to allocate the TAL to the terminal device at the current location. The AMF sends the N2 user equipment context release command message to the source RAN node, to release a context of the terminal device that is stored in the source RAN node. After receiving, from the source RAN node, a response message of releasing the context, the AMF sends the registration accept message to the terminal device by using the target RAN node. The registration accept message includes the TAL allocated to the terminal device. According to the foregoing embodiment, the terminal device in the RRC-inactive state performs a mobility-triggered TAU.

In an implementation scenario, the method further includes: receiving, by the AMF, location information of the terminal device from the target RAN node; determining, by the AMF based on the location information of the terminal device and a non-allowed area in a context of the terminal device, that the terminal device is located in the non-allowed area; and setting, by the AMF, the terminal device to a connection management CM idle state. This implementation provides a specific implementation in which the AMF switches a CM status of the terminal device, so that the CM status of the terminal device is the CM idle state.

In an implementation scenario, the method further includes: sending, by the AMF, a packet data unit PDU session deactivation request message to a session management function SMF, where the PDU session deactivation request message is used to request the SMF to deactivate a PDU session of the terminal device; or sending, by the AMF, indication information to the SMF, where the indication information is used to indicate that the terminal device is located in the non-allowed area. This implementation provides a specific implementation in which the AMF and the SMF switch a status of the PDU session of the terminal device, so that the PDU session of the terminal device is in a deactivated state or an idle state.

In an implementation scenario, the N2 user equipment context release command message includes a release cause, and the release cause is used to indicate that the terminal device is located in the non-allowed area. This implementation provides a possible implementation form of the release cause.

According to a fourth aspect, an embodiment of this application provides an access and mobility management function AMF. The AMF includes: a receiving unit, configured to receive a registration request message from a target radio access network RAN node, where the registration request message is used to request to allocate a tracking area list TAL to a terminal device, and the terminal device is in a radio resource control RRC-inactive state; and a sending unit, configured to send an N2 user equipment context release command message to a source RAN node, where the receiving unit is configured to receive an N2 user equipment context release complete message sent by the source RAN node; and the sending unit is further configured to send a registration accept message to the terminal device by using the target RAN node, where the registration accept message includes the TAL. Based on a same inventive concept, for a problem-resolving principle and beneficial effects of the AMF, refer to the third aspect, the possible method implementations of the third aspect, and brought beneficial effects. Therefore, for implementation of the AMF, refer to the third aspect and the possible method implementations of the third aspect. Details are not repeated.

According to a fifth aspect, an embodiment of this application provides a communication method. The method includes: receiving, by a session management function SMF, indication information from an access and mobility management function AMF, where the indication information is used to indicate that a terminal device is located in a non-allowed area; and triggering, by the SMF, a PDU session release procedure or a PDU session deactivation procedure of the terminal device based on a local session management SM policy and the indication information. This implementation provides a specific implementation in which the AMF and the SMF switch a status of a PDU session of the terminal device, so that the PDU session of the terminal device is in a deactivated state or an idle state.

According to a sixth aspect, an embodiment of this application provides a session management function SMF. The SMF includes: a receiving unit, configured to receive indication information from an access and mobility management function AMF, where the indication information is used to indicate that a terminal device is located in a non-allowed area; and a sending unit, configured to trigger a PDU session release procedure or a PDU session deactivation procedure of the terminal device based on a local session management SM policy and the indication information. Based on a same inventive concept, for a problem-resolving principle and beneficial effects of the SMF, refer to the fifth aspect, the possible method implementations of the fifth aspect, and brought beneficial effects. Therefore, for implementation of the SMF, refer to the fifth aspect and the possible method implementations of the fifth aspect. Details are not repeated.

According to a seventh aspect, an embodiment of this application provides a communication method. The method includes: when a TAI of a location of a terminal device in a radio resource control RRC-inactive state does not belong to a tracking area list TAL of the terminal device, sending, by the terminal device, a radio resource control RRC connection resume request message to a target radio access network RAN node, where the terminal device is in the RRC-inactive state; receiving, by the terminal device, an RRC connection resume reject message from the target RAN node; and switching, by the terminal device, from a connection management CM connected state to a CM idle state based on the RRC connection resume reject message. According to the communication method provided in this embodiment of this application, when the TAI of the location of the terminal device in the RRC-inactive state does not belong to the TAL of the terminal device, it indicates that the terminal device has moved out of an area defined by the TAL. The terminal device first attempts to resume an RRC connection, and a source RAN node may reject or accept the request. When the source RAN node rejects the request, on one hand, the source RAN node notifies, by using the target RAN node, the terminal device that the source RAN node rejects resumption of the RRC connection of the terminal device; on the other hand, the target RAN node initiates an N2 release procedure by using an AMF. When the source RAN node accepts the request, the target RAN node notifies the terminal device that the request of the terminal device is accepted, and then the terminal device initiates a registration request to obtain a TAL of the terminal device from the AMF. According to the foregoing processing manner, the terminal device in the RRC-inactive state performs a mobility-triggered TAU.

In an implementation scenario, the target RAN node is located in a non-allowed area. This implementation provides an area in which the target RAN node may be located.

According to an eighth aspect, an embodiment of this application provides a terminal device. The terminal device includes: a sending unit, configured to: when a TAI of a location of the terminal device in a radio resource control RRC-inactive state does not belong to a tracking area list TAL of the terminal device, send a radio resource control RRC connection resume request message to a target radio access network RAN node, where the terminal device is in the RRC-inactive state; a receiving unit, configured to receive an RRC connection resume reject message from the target RAN node; and a switching unit, configured to switch from a connection management CM connected state to a CM idle state based on the RRC connection resume reject message. Based on a same inventive concept, for a problem-resolving principle and beneficial effects of the terminal device, refer to the seventh aspect, the possible method implementations of the seventh aspect, and brought beneficial effects. Therefore, for implementation of the terminal device, refer to the seventh aspect and the possible method implementations of the seventh aspect. Details are not repeated.

According to a ninth aspect, an embodiment of this application provides a communication method. The method includes: receiving, by a target radio access network RAN node, a radio resource control RRC connection resume request message from a terminal device, where the terminal device is in an RRC-inactive state; sending, by the target RAN node, a retrieve user equipment context request message to a source RAN node, where the retrieve user equipment context request message is used to obtain context information of the terminal device; and when the target RAN node receives the context information of the terminal device from the source RAN node, sending, by the target RAN node, an RRC connection resume message to the terminal device, sending a path switch request message to an access and mobility management function AMF, receiving a path switch response message from the AMF, and sending a user equipment context release message to the source RAN node; or when the target RAN node receives a retrieve user equipment context reject message from the source RAN node, or when the target RAN node receives a retrieve user equipment context response message from the source RAN node, and the retrieve user equipment context response message carries failure indication information used to indicate a failure in obtaining the context information, sending, by the target RAN node, an RRC connection resume reject message to the terminal device. According to the communication method provided in this embodiment of this application, when a TAI of a location of the terminal device in the RRC-inactive state does not belong to a TAL of the terminal device, it indicates that the terminal device has moved out of an area defined by the TAL. The terminal device first attempts to resume an RRC connection, and the source RAN node may reject or accept the request. When the source RAN node rejects the request, on one hand, the source RAN node notifies, by using the target RAN node, the terminal device that the source RAN node rejects resumption of the RRC connection of the terminal device; on the other hand, the target RAN node initiates an N2 release procedure by using the AMF When the source RAN node accepts the request, the target RAN node notifies the terminal device that the request of the terminal device is accepted, and then the terminal device initiates a registration request to obtain a TAL of the terminal device from the AMF. According to the foregoing processing manner, the terminal device in the RRC-inactive state performs a mobility-triggered TAU.

In an implementation scenario, the path switch response message includes a tracking area list TAL reallocated to the terminal device, and the method further includes: generating, by the target RAN node, a RAN notification area RNA based on the TAL; and sending, by the target RAN node, the RNA to the terminal device. This implementation provides a specific implementation in which the target RAN node generates the RNA for the terminal device, so that the terminal device can obtain an updated RNA.

In an implementation scenario, the target RAN node is located in a non-allowed area, and after the target RAN node receives the context information of the terminal device from the source RAN node, the method further includes: triggering, by the target RAN node, an access network AN node user equipment context release procedure; and deleting, by the target RAN node, the context information of the terminal device. According to this implementation, the target RAN node deletes a context of the terminal device.

According to a tenth aspect, an embodiment of this application provides a target radio access network RAN node. The target RAN node includes: a receiving unit, configured to receive a radio resource control RRC connection resume request message from a terminal device, where the terminal device is in an RRC-inactive state; and a sending unit, configured to send a retrieve user equipment context request message to a source RAN node, where the retrieve user equipment context request message is used to obtain context information of the terminal device, where when the target RAN node receives the context information of the terminal device from the source RAN node, the sending unit is further configured to send an RRC connection resume message to the terminal device, and send a path switch request message to an access and mobility management function AMF; the receiving unit is further configured to receive a path switch response message from the AMF; and the sending unit is further configured to send a user equipment context release message to the source RAN node; or when the target RAN node receives a retrieve user equipment context reject message from the source RAN node, or when the target RAN node receives a retrieve user equipment context response message from the source RAN node, and the retrieve user equipment context response message carries failure indication information used to indicate a failure in obtaining the context information, the sending unit is further configured to send an RRC connection resume reject message to the terminal device. Based on a same inventive concept, for a problem-resolving principle and beneficial effects of the target RAN node, refer to the ninth aspect, the possible method implementations of the ninth aspect, and brought beneficial effects. Therefore, for implementation of the target RAN node, refer to the ninth aspect and the possible method implementations of the ninth aspect. Details are not repeated.

According to an eleventh aspect, an embodiment of this application provides a communication method. The method includes: receiving, by an access and mobility management function AMF, a path switch request message from a target radio access network RAN node, where the path switch request message carries location information of a terminal device; determining, by the AMF based on the location information of the terminal device, that a TAI of a location of the terminal device does not belong to a tracking area list TAL of the terminal device; and reallocating, by the AMF, a TAL to the terminal device, and sending the reallocated TAL to the target RAN node. According to the communication method provided in this embodiment of this application, when the TAI of the location of the terminal device in an RRC-inactive state does not belong to the TAL of the terminal device, it indicates that the terminal device has moved out of an area defined by the TAL. The terminal device first attempts to resume an RRC connection, and a source RAN node may reject or accept the request. When the source RAN node rejects the request, on one hand, the source RAN node notifies, by using the target RAN node, the terminal device that the source RAN node rejects resumption of the RRC connection of the terminal device; on the other hand, the target RAN node initiates an N2 release procedure by using the AMF. When the source RAN node accepts the request, the target RAN node notifies the terminal device that the request of the terminal device is accepted, and then the terminal device initiates a registration request to obtain the TAL of the terminal device from the AMF. According to the foregoing processing manner, the terminal device in the RRC-inactive state performs a mobility-triggered TAU.

In an implementation scenario, the sending the reallocated TAL to the target RAN node includes: sending, by the AMF, a path switch response message to the target RAN node, where the path switch response message includes the reallocated TAL. This implementation provides a possible implementation of a message used by the AMF to send the reallocated TAL to the target RAN node.

In an implementation scenario, the method further includes: when the target RAN node is located in a non-allowed area, sending, by the AMF, indication information to a session management function SMF, where the indication information is used to indicate that the terminal device is located in the non-allowed area; or triggering, by the AMF, an access network AN node user equipment context release procedure. According to this implementation, when the TAI of the location of the terminal device does not belong to the TAL of the terminal device, the target RAN releases a UE context of the terminal device.

According to a twelfth aspect, an embodiment of this application provides an access and mobility management function AMF. The AMF includes: a receiving unit, configured to receive a path switch request message from a target radio access network RAN node, where the path switch request message carries location information of a terminal device; a determining unit, configured to determine, based on the location information of the terminal device, that a TAI of a location of the terminal device does not belong to a tracking area list TAL of the terminal device; and a sending unit, configured to reallocate a TAL to the terminal device, and send the reallocated TAL to the target RAN node. Based on a same inventive concept, for a problem-resolving principle and beneficial effects of the AMF, refer to the eleventh aspect, the possible method implementations of the eleventh aspect, and brought beneficial effects. Therefore, for implementation of the AMF, refer to the eleventh aspect and the possible method implementations of the eleventh aspect. Details are not repeated.

According to a thirteenth aspect, an embodiment of this application provides a communication method. The method includes: receiving, by a source radio access network RAN node, a retrieve user equipment context request message from a target RAN node, where the retrieve user equipment context request message is used to obtain context information of a terminal device, and the terminal device is in a radio resource control RRC-inactive state; when the target RAN node is located in a non-allowed area, sending, by the source RAN node, a retrieve user equipment context reject message to the target RAN node; or when the target RAN node is located in a non-allowed area, sending, by the source RAN node, a retrieve user equipment context response message to the target RAN node, where the retrieve user equipment context response message carries failure indication information, and the failure indication information is used to indicate a failure cause of obtaining the context information of the terminal device; and sending, by the source RAN node, an N2 user equipment context release request message to an access and mobility management function AMF. According to the communication method provided in this embodiment of this application, when a TAI of a location of the terminal device in the RRC-inactive state does not belong to a TAL of the terminal device, it indicates that the terminal device has moved out of an area defined by the TAL. The terminal device first attempts to resume an RRC connection, and the source RAN node may reject or accept the request. When the source RAN node rejects the request, on one hand, the source RAN node notifies, by using the target RAN node, the terminal device that the source RAN node rejects resumption of the RRC connection of the terminal device; on the other hand, the target RAN node initiates an N2 release procedure by using the AMF. When the source RAN node accepts the request, the target RAN node notifies the terminal device that the request of the terminal device is accepted, and then the terminal device initiates a registration request to obtain a TAL of the terminal device from the AMF. According to the foregoing processing manner, the terminal device in the RRC-inactive state performs a mobility-triggered TAU.

In an implementation scenario, the retrieve user equipment context reject message carries a reject cause, the reject cause is that the terminal device is located in the non-allowed area, the N2 user equipment context release request message carries a release request cause, and the release request cause is that the terminal device is located in the non-allowed area; or the failure indication information is used to indicate that the terminal device is located in the non-allowed area, the N2 user equipment context release request message carries a release request cause, and the release request cause is that the terminal device is located in the non-allowed area. This implementation provides possible specific implementations of the reject cause and the release request cause.

According to a fourteenth aspect, an embodiment of this application provides a source radio access network RAN node. The source RAN node includes: a receiving unit, configured to receive a retrieve user equipment context request message from a target RAN node, where the retrieve user equipment context request message is used to obtain context information of a terminal device, and the terminal device is in a radio resource control RRC-inactive state; and a sending unit, configured to: when the target RAN node is located in a non-allowed area, send a retrieve user equipment context reject message to the target RAN node; or when the target RAN node is located in a non-allowed area, send a retrieve user equipment context response message to the target RAN node, where the retrieve user equipment context response message carries failure indication information, and the failure indication information is used to indicate a failure cause of obtaining the context information of the terminal device, where the sending unit is further configured to send an N2 user equipment context release request message to an access and mobility management function AMF. Based on a same inventive concept, for a problem-resolving principle and beneficial effects of the source RAN node, refer to the thirteenth aspect, the possible method implementations of the thirteenth aspect, and brought beneficial effects. Therefore, for implementation of the source RAN node, refer to the thirteenth aspect and the possible method implementations of the thirteenth aspect. Details are not repeated.

According to a fifteenth aspect, an embodiment of this application provides a terminal device, including: a processor, a memory, a bus, and a communications interface, where the memory is configured to store a computer executable instruction, the processor is connected to the memory through the bus, and when the terminal device runs, the processor executes the computer executable instruction stored in the memory, so that the terminal device performs the method according to any one of the first aspect or any one of the seventh aspect.

According to a sixteenth aspect, an embodiment of this application provides a computer storage medium, where the computer storage medium includes an instruction, and when the instruction is run on a computer, the computer is enabled to perform the method according to any one of the first aspect or any one of the seventh aspect.

According to a seventeenth aspect, an embodiment of this application provides a computer program product including an instruction, where when the computer program product is run on a computer, the computer is enabled to perform the method according to any one of the first aspect or any one of the seventh aspect.

In addition, for technical effects brought in the fifteenth aspect to the seventeenth aspect, refer to the technical effects brought by different design manners in any one of the first aspect or any one of the seventh aspect. Details are not described herein again.

According to an eighteenth aspect, an embodiment of this application provides an access and mobility management function AMF, including: a processor, a memory, a bus, and a communications interface, where the memory is configured to store a computer executable instruction, the processor is connected to the memory through the bus, and when the AMF runs, the processor executes the computer executable instruction stored in the memory, so that the AMF performs the method according to any one of the third aspect or any one of the eleventh aspect.

According to a nineteenth aspect, an embodiment of this application provides a computer storage medium, where the computer storage medium includes an instruction, and when the instruction is run on a computer, the computer is enabled to perform the method according to any one of the third aspect or any one of the eleventh aspect.

According to a twentieth aspect, an embodiment of this application provides a computer program product including an instruction, where when the computer program product is run on a computer, the computer is enabled to perform the method according to any one of the third aspect or any one of the eleventh aspect.

In addition, for technical effects brought in the eighteenth aspect to the twentieth aspect, refer to the technical effects brought by different design manners in any one of the third aspect or any one of the eleventh aspect. Details are not described herein again.

According to a twenty-first aspect, an embodiment of this application provides a session management function SMF, including: a processor, a memory, a bus, and a communications interface, where the memory is configured to store a computer executable instruction, the processor is connected to the memory through the bus, and when the SMF runs, the processor executes the computer executable instruction stored in the memory, so that the SMF performs the method according to any one of the fifth aspect.

According to a twenty-second aspect, an embodiment of this application provides a computer storage medium, where the computer storage medium includes an instruction, and when the instruction is run on a computer, the computer is enabled to perform the method according to any one of the fifth aspect.

According to a twenty-third aspect, an embodiment of this application provides a computer program product including an instruction, where when the computer program product is run on a computer, the computer is enabled to perform the method according to any one of the fifth aspect.

In addition, for technical effects brought in the twenty-first aspect to the twenty-third aspect, refer to the technical effects brought by different design manners in any one of the fifth aspect. Details are not described herein again.

According to a twenty-fourth aspect, an embodiment of this application provides a radio access network RAN node, including: a processor, a memory, a bus, and a communications interface, where the memory is configured to store a computer executable instruction, the processor is connected to the memory through the bus, and when the RAN node runs, the processor executes the computer executable instruction stored in the memory, so that the RAN node performs the method according to any one of the ninth aspect or any one of the thirteenth aspect.

According to a twenty-fifth aspect, an embodiment of this application provides a computer storage medium, where the computer storage medium includes an instruction, and when the instruction is run on a computer, the computer is enabled to perform the method according to any one of the ninth aspect or any one of the thirteenth aspect.

According to a twenty-sixth aspect, an embodiment of this application provides a computer program product including an instruction, where when the computer program product is run on a computer, the computer is enabled to perform the method according to any one of the ninth aspect or any one of the thirteenth aspect.

In addition, for technical effects brought in the twenty-fourth aspect to the twenty-sixth aspect, refer to the technical effects brought by different design manners in any one of the ninth aspect or any one of the thirteenth aspect. Details are not described herein again.

### BRIEF DESCRIPTION OF DRAWINGS

To describe the technical solutions in the embodiments of this application or in the prior art more clearly, the following briefly describes the accompanying drawings required for describing the embodiments or the prior art.
FIG. 1 is a schematic architectural diagram of a communications system according to an embodiment of this application;
FIG. 2 is a schematic structural diagram of hardware of devices in a system according to an embodiment of this application;
FIG. 3 is a first schematic flowchart of a communication method according to an embodiment of this application;
FIG. 4A and FIG. 4B are a second schematic flowchart of a communication method according to an embodiment of this application;
FIG. 5A and FIG. 5B are a third schematic flowchart of a communication method according to an embodiment of this application;
FIG. 6A and FIG. 6B are a fourth schematic flowchart of a communication method according to an embodiment of this application;
FIG. 7 is a schematic flowchart of triggering a PDU session release procedure by an SMF according to an embodiment of this application;
FIG. 8 is a schematic flowchart of triggering a PDU session deactivation procedure by an SMF according to an embodiment of this application;
FIG. 9A to FIG. 9C are a fifth schematic flowchart of a communication method according to an embodiment of this application;
FIG. 10A to FIG. 10C are a sixth schematic flowchart of a communication method according to an embodiment of this application;
FIG. 11 is a schematic flowchart of triggering an AN node UE context release procedure by a target RAN node according to an embodiment of this application;
FIG. 12A to FIG. 12C are a seventh schematic flowchart of a communication method according to an embodiment of this application;
FIG. 13A to FIG. 13C are an eighth schematic flowchart of a communication method according to an embodiment of this application;
FIG. 14 is a schematic flowchart of triggering an AN node UE context release procedure by an AMF according to an embodiment of this application;
FIG. 15A and FIG. 15B are a ninth schematic flowchart of a communication method according to an embodiment of this application;
FIG. 16A and FIG. 16B are a tenth schematic flowchart of a communication method according to an embodiment of this application;
FIG. 17A and FIG. 17B are an eleventh schematic flowchart of a communication method according to an embodiment of this application;
FIG. 18 is a twelfth schematic flowchart of a communication method according to an embodiment of this application;
FIG. 19 is a first schematic structural diagram of a terminal device according to an embodiment of this application;
FIG. 20 is a second schematic structural diagram of a terminal device according to an embodiment of this application;
FIG. 21 is a first schematic structural diagram of a RAN node according to an embodiment of this application;
FIG. 22 is a second schematic structural diagram of a RAN node according to an embodiment of this application;
FIG. 23 is a first schematic structural diagram of an AMF according to an embodiment of this application;
FIG. 24 is a second schematic structural diagram of an AMF according to an embodiment of this application;
FIG. 25 is a first schematic structural diagram of an SMF according to an embodiment of this application; and
FIG. 26 is a second schematic structural diagram of an SMF according to an embodiment of this application.

### DESCRIPTION OF EMBODIMENTS

The following clearly and completely describes the technical solutions in the embodiments of this application with reference to the accompanying drawings in the embodiments of this application.

A network architecture and a service scenario described in the embodiments of this application are intended to describe the technical solutions in the embodiments of this application more clearly, and do not constitute a limitation on the technical solutions provided in the embodiments of this application. A person of ordinary skill in the art may know that: With evolution of the network architecture and emergence of new service scenarios, the technical solutions provided in the embodiments of this application are also applicable to similar technical problems. It should be noted that the solutions in the embodiments of this application may further be applied to another wireless communications network, and a corresponding name may also be replaced with a name of a corresponding function in the another wireless communications network.

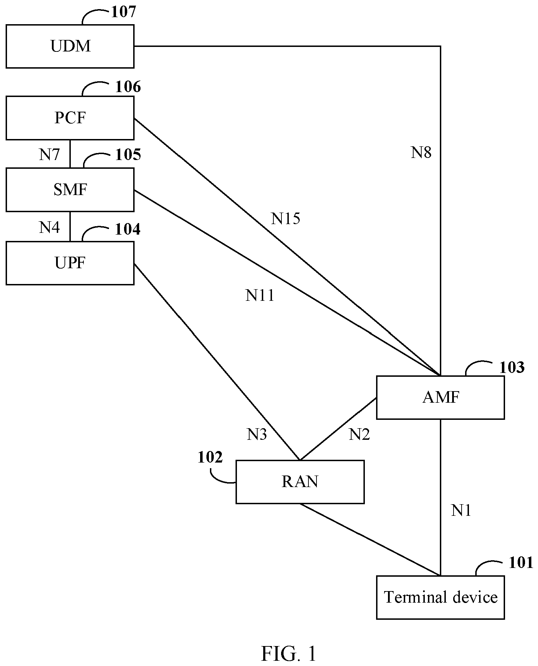

FIG. 1 is a schematic diagram of a network architecture of a communications system according to an embodiment of this application. The communications system includes: a terminal device 101, a radio access network (Radio Access Network, RAN) node 102, an access and mobility management function (Access and Mobility management Function, AMF) 103, a user plane function (User Plane Function, UPF) 104, a session management function (Session Management Function, SMF) 105, a policy control function (Policy Control Function, PCF) 106, and unified data management (Unified Data Management, UDM) 107.

The terminal device 101 may include communications devices such as user equipment (User Equipment, UE), a tablet computer (Pad), and a personal computer (Personal Computer, PC).

The RAN node 102 may be a 5G base station, and the terminal device may access a 5G communications system by using the base station.

The AMF 103 is a 5G core network device, and is configured to perform authentication and authorization on a user and manage mobility of the user.

The UPF 104 is a user plane device of a 5G core network, provides a user plane service for a packet data unit (Packet Data Unit, PDU) session of the terminal device, and is an interface gateway between an operator network and an external network.

The SMF 105 is a control plane device of the 5G core network, provides a control plane service for the PDU session of the terminal device, manages a PDU session in 5G and quality of service (Quality of Service, QoS) in 5G, and is responsible for allocating an IP address to the terminal device and selecting a UPF for the terminal device.

The PCF 106 is a 5G core network device, and is responsible for generating a policy used by a user to establish a QoS data flow (QoS flow).

The UDM 107 is a 5G core network device, and is configured to store subscription data of the user.

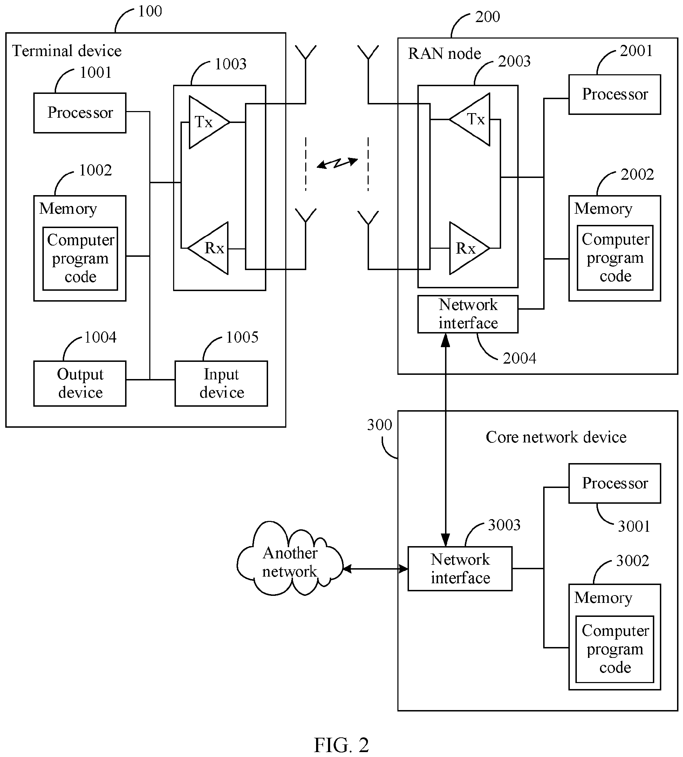

FIG. 2 is a structural diagram of hardware of devices according to an embodiment of this application.

A terminal device 100 includes at least one processor 1001, at least one memory 1002, and at least one transceiver 1003. Optionally, the terminal device 100 may further include an output device 1004 and an input device 1005. The terminal device 100 is configured to perform functions of a terminal device described in the following method embodiments.

The processor 1001, the memory 1002, and the transceiver 1003 are connected through a bus. The processor 1001 may be a general-purpose central processing unit (Central Processing Unit, CPU), a microprocessor, an application-specific integrated circuit (Application-Specific Integrated Circuit, ASIC), a field-programmable gate array (Field-Programmable Gate Array, FPGA), a complex programmable logic device (Complex Programmable Logic Device, CPLD), or one or more integrated circuits configured to control program execution in the solutions of this application. The processor 1001 may alternatively be a plurality of processors, and each processor may be a single-core (single-CPU) processor or a multi-core (multi-CPU) processor. The processor herein may be one or more devices, circuits, and/or processing cores configured to process data (for example, a computer program instruction).

The memory 1002 may be, but is not limited to, a read-only memory (Read-Only Memory, ROM) or another type of static storage device capable of storing static information and instructions, a random access memory (Random Access Memory, RAM) or another type of dynamic storage device capable of storing information and instructions, an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in an instruction or data structure form and that can be accessed by a computer. The memory 1002 may exist independently, and is connected to the processor 1001 through the bus. Alternatively, the memory 1002 may be integrated with the processor 1001. The memory 1002 is configured to store application program code for executing the solutions in this application, and the processor 1001 controls the execution. The processor 1001 is configured to execute computer program code stored in the memory 1002, to implement the methods described in the embodiments of this application.

The transceiver 1003 may use any apparatus of a transceiver type, and is configured to communicate with another device or a communications network, for example, the Ethernet, a RAN node, or a wireless local area network (Wireless Local Area Networks, WLAN). The transceiver 1003 includes a transmitter Tx and a receiver Rx.

The output device 1004 communicates with the processor 1001, and may display information in a plurality of manners. For example, the output device 1004 may be a liquid crystal display (Liquid Crystal Display, LCD), a light emitting diode (Light Emitting Diode, LED) display device, a cathode ray tube (Cathode Ray Tube, CRT) display device, or a projector (projector). The input device 1005 communicates with the processor 1001, and may receive user input in a plurality of manners. For example, the input device 1005 may be a mouse, a keyboard, a touchscreen device, or a sensing device.

A RAN node 200 (the RAN 102) includes at least one processor 2001, at least one memory 2002, at least one transceiver 2003, and at least one network interface 2004. The at least one processor 2001, the at least one memory 2002, the at least one transceiver 2003, and the at least one network interface 2004 are connected through a bus. The network interface 2004 is configured to connect to a network interface 3003 of a core network device 300 through a link (for example, an S1 interface), or connect to a network interface 2004 of another RAN node through a wired or wireless link (for example, an X2 interface). The transceiver 2003 is configured to communicate with the terminal device 100. For functions of remaining components of the RAN node 200, refer to the function descriptions of the components of the terminal device 100. Details are not described herein again. The RAN node 200 is configured to perform functions of a target RAN node or a source RAN node described in the following method embodiments.

The core network device 300 may further provide a network connection, for example, a telephony network and/or a data communications network (such as the Internet). The core network device 300 includes at least one processor 3001, at least one memory 3002, and at least one network interface 3003. The at least one processor 3001, the at least one memory 3002, and the at least one network interface 3003 are connected through a bus. The network interface 3003 is configured to connect to the network interface 2004 of the RAN node 200 through the link (for example, the S1 interface), or connect between core network devices through a wired or wireless link. For functions of the components in the core network device 300, refer to the function descriptions of the components in the terminal device 100. Details are not described herein again. The core network device 300 is configured to perform functions of an AMF, an SMF, or a UPF described in the following method embodiments.

A service area (service area) mentioned in the embodiments of this application may include an allowed area (allowed area) and a non-allowed area (non-allowed area) through division based on function areas. In the allowed area, the terminal device is allowed to perform service communication. For example, the terminal device may be allowed, based on subscription information between the terminal device and an operator, to initiate any normal service communication. In the non-allowed area, the terminal device is not allowed to perform normal service communication with a network side. For example, the terminal device and the network side are not allowed to send a service request (Service Request) or session management (Session Management) signaling, but the terminal device or the network side is allowed to initiate a registration management (Registration Management) procedure.

In the embodiments of this application, as described above, a TAL may be used to indicate a registration area of the terminal device. All tracking areas in the registration area may belong to the non-allowed area, or may belong to the allowed area. That is, the registration area of the terminal device may include one or more tracking areas that belong to the non-allowed area, but not include a tracking area belonging to the allowed area. Alternatively, the registration area of the terminal device may include one or more tracking areas that belong to the allowed area, but not include a tracking area belonging to the non-allowed area. In this case, when the terminal device moves from the allowed area to the non-allowed area, or moves from the non-allowed area to the allowed area, it means that the terminal device moves out of a current registration area, and the terminal device initiates the registration management procedure.

In addition, when the terminal device is in an RRC-inactive state, the RAN node generates a RAN notification area (RAN Notification Area, RNA) based on the TAL of the terminal device, and sends the RAN notification area to the terminal device. When the terminal device moves away from an RNA of a location of the terminal device, the terminal device initiates an RRC connection resume request (RRC Connection Resume request) to the RAN node, and the RAN node allocates a new RNA to the terminal device. It should be noted that the RNA needs to be a part of a TAL allocated by the core network. The TAL allocated by the core network is sent by the AMF to the RAN node.

The source RAN node mentioned in the embodiments of this application is a RAN node that provides a service for the terminal device before the terminal device leaves a first area. Correspondingly, the target RAN node is a RAN node that provides a service for the terminal device when the terminal device moves to a second area.

The first area and the second area that are mentioned in the embodiments of this application respectively belong to areas defined by different TALs. For example, the first area may be the allowed area described above, and the second area is the non-allowed area. This is not limited in the embodiments of this application.

Switching the terminal device to a connection management (Connection Management, CM) idle state that is mentioned in the embodiments of this application may be replaced with switching the terminal device from a CM connected state and an RRC-inactive state to the CM idle state, or setting the terminal device in any CM status to the CM idle state; or may be another switching or setting process. This is not limited in the embodiments of this application, provided that a final state is the CM idle state.

An embodiment of this application provides a communication method. The method may be applied to a case in which a terminal device in an RRC-inactive state moves from a first area to a second area. The first area belongs to a registration area of the terminal device, and the second area does not belong to the registration area of the terminal device. Both the first area and the second area may be TAs or cells. This is not limited. In addition, the registration area of the terminal device is an area defined by or corresponding to a TAL currently stored in the terminal device. Further, the first area may be an allowed area, and the second area may be a non-allowed area.

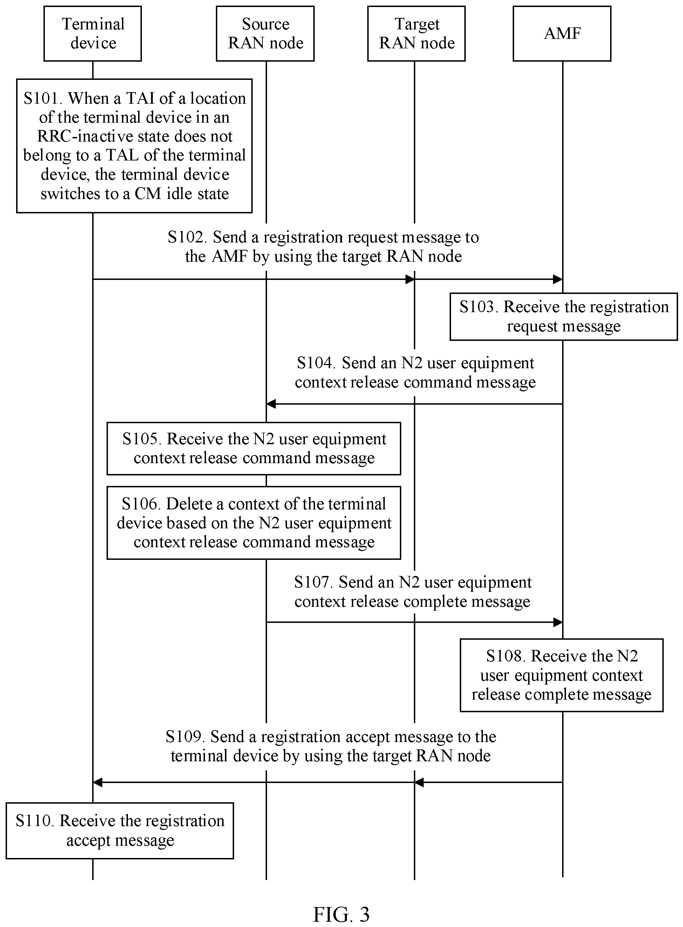

Referring to FIG. 3, the method includes the following steps.

S101. When a TAI of a location of the terminal device in the RRC-inactive state does not belong to the TAL of the terminal device, the terminal device switches to a CM idle state.

The TAL may be obtained from an AMF by using a registration accept (registration accept) message, a user equipment configuration update command (UE configuration update command) message, or the like when the terminal device is located in the first area.

For example, after the terminal device moves to the second area, the terminal device may detect the TAI of the location of the terminal device by listening to a system information block (System Information Block, SIB) of an air interface. Further, the terminal device determines whether the TAI of the location of the terminal device belongs to the currently stored TAL, to determine whether the terminal device has moved out of the registration area of the terminal device.

The TAI of the location of the terminal device is a TAI corresponding to a TA to which the current location of the terminal device belongs, or a TAI corresponding to the current location of the terminal device. When the TAI of the location of the terminal device does not belong to the TAL of the terminal device, it indicates that the terminal device has moved out of the area defined by the TAL. In this case, the terminal device may perform a TAU.

Optionally, the terminal device may store a TAI of the allowed area or a TAI of the non-allowed area. Therefore, the terminal device may match the TAI of the location of the terminal device with the TAI of the allowed area, or may match the TAI of the location of the terminal device with the TAI of the non-allowed area, to determine whether the terminal device is located in the allowed area or the non-allowed area. This implementation provides an implementation in which the terminal device determines whether the terminal device is located in the allowed area or the non-allowed area.

Optionally, an area corresponding to the TAI of the location of the terminal device is the non-allowed area, and the area corresponding to the TAL is the allowed area. This implementation indicates that the terminal device moves from the allowed area to the non-allowed area.

S102. The terminal device sends a registration request (registration request) message to the AMF by using a target RAN node.

The registration request message may be used to request to allocate a TAL to the terminal device or used to request to update the TAL for the terminal device. The registration request message may be a registration request message of a mobility update (mobility update) type. The mobility update type is an update triggered when the terminal device moves out of the area defined by the TAL of the terminal device, in other words, the terminal device moves out of the area defined by the TAL stored in the terminal device.

S103. The AMF receives the registration request message from the target RAN node.

S104. The AMF sends an N2 user equipment context release command (N2 UE context release command) message to a source RAN node.

The source RAN node may also be referred to as an anchor (anchor) RAN node.

The N2 user equipment context release command message is used to request the source RAN node to release a context of the terminal device.

Optionally, the N2 user equipment context release command message includes a release cause, and the release cause may be used to indicate that the terminal device is located in the non-allowed area (non-allowed area). This implementation provides a possible implementation form of the release cause.

Further, optionally, the AMF may determine, based on the non-allowed area in the context (context) of the terminal device that is stored in the AMF and the TAI of the current location of the terminal device, that the terminal device is located in the non-allowed area. For example, when the TAI of the location of the terminal device belongs to the TAI of the non-allowed area, it may be determined that the terminal device is located in the non-allowed area.

S105. The source RAN node receives the N2 user equipment context release command (N2 UE context release command) message sent by the AMF.

S106. The source RAN node deletes the context of the terminal device based on the N2 user equipment context release command message.

S107. The source RAN node sends an N2 user equipment context release complete (N2 UE context release complete) message to the AMF

S108. The AMF receives the N2 user equipment context release complete message sent by the source RAN node.

S109. The AMF sends a registration accept (registration accept) message to the terminal device by using the target RAN node, where the registration accept message includes the TAL allocated to the terminal device.

S110. The terminal device receives, by using the target RAN node, the registration accept message sent by the AMF.

According to the communication method provided in this embodiment of this application, when the TAI of the location of the terminal device in the RRC-inactive state does not belong to the TAL of the terminal device, it indicates that the terminal device has moved out of the area defined by the TAL of the terminal device. In this case, the terminal device switches to the CM idle state, and the terminal device sends the registration request message to the AMF to request to allocate the TAL to the terminal device at the current location. The AMF sends the N2 user equipment context release command message to the source RAN node, to release the context of the terminal device that is stored in the source RAN node. After receiving, from the source RAN node, a response message of releasing the context, the AMF sends the registration accept message to the terminal device by using the target RAN node. The registration accept message includes the TAL allocated to the terminal device. According to the foregoing embodiment, the terminal device in the RRC-inactive state performs a mobility-triggered TAU.

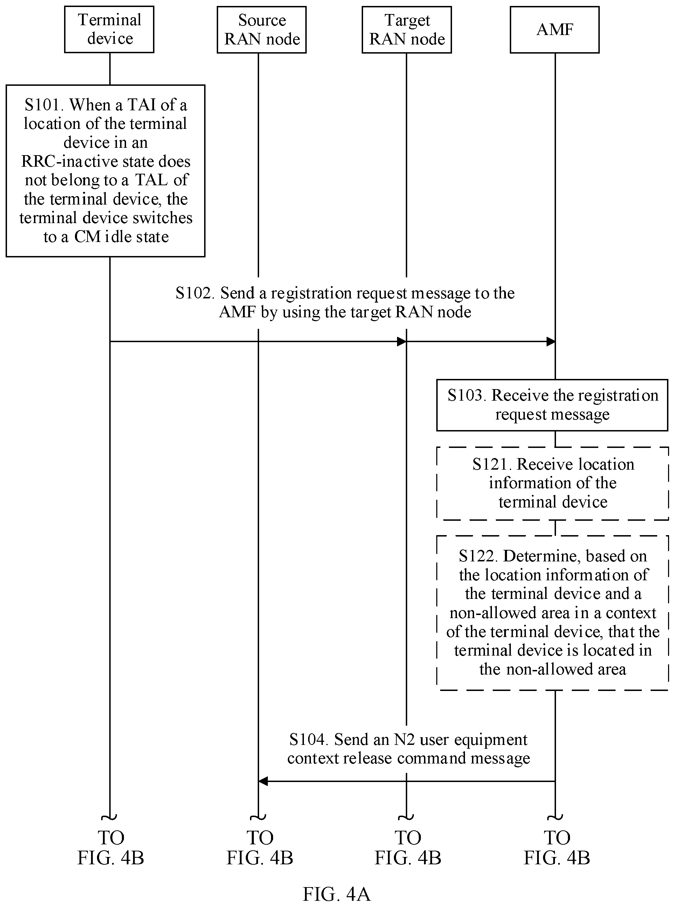

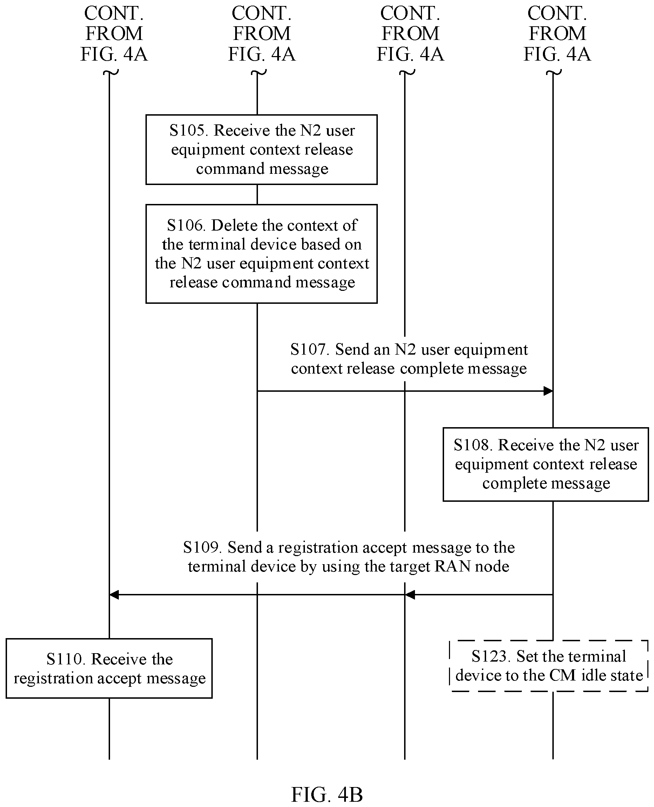

Optionally, referring to FIG. 4A and FIG. 4B, in an implementation scenario of the foregoing embodiment, the foregoing method further includes steps S121 to S123.

S121. The AMF receives location information of the terminal device from the target RAN node.

The location information of the terminal device may include at least one of the following information: the TAI of the terminal device, a RAN node cell global identifier (RAN node Cell Global Identifier, CGI) of the terminal device, or identification information of the target RAN node.

The TAI of the terminal device is the TAI corresponding to the TA in which the terminal device is located.

It should be noted that the location information of the terminal device and the registration request message in step S102 may be sent by the RAN node to the AMF by using one message. For example, after receiving the registration request message, the target RAN node sends an initial user equipment message (initial UE message) to the AMF, where the initial user equipment message includes the location information of the terminal device and the registration request message in step S102. Clearly, the RAN node may alternatively separately send the location information of the terminal device and the registration request message to the AMF by using two messages. This is not limited in this embodiment of this application.

S122. The AMF determines, based on the location information of the terminal device and the non-allowed area in the context of the terminal device, that the terminal device is located in the non-allowed area.

For example, when the location information of the terminal device is the TAI of the terminal device, the AMF may match the TAI of the terminal device with the TAI of the allowed area in the context of the terminal device, to determine whether the terminal device is located in the allowed area or the non-allowed area; or the AMF may match the TAI of the terminal device with the TAI of the non-allowed area in the context of the terminal device.

S123. The AMF sets the terminal device to the CM idle state.

After sending the registration accept message to the terminal device, the AMF initiates an access network (Access Network, AN) node UE context release procedure (UE context release in the AN). After the procedure ends, the AMF and the terminal device switch from a CM connected state to the CM idle state.

For example, the AMF may switch the terminal device from the CM connected state to the CM idle state, or the AMF switches the terminal device from the RRC-inactive state to the CM idle state. This is not limited in this embodiment of this application.

The implementation described in steps S121 to S123 provides a specific implementation in which the AMF switches a CM status of the terminal device, so that the CM status of the terminal device is the CM idle state.

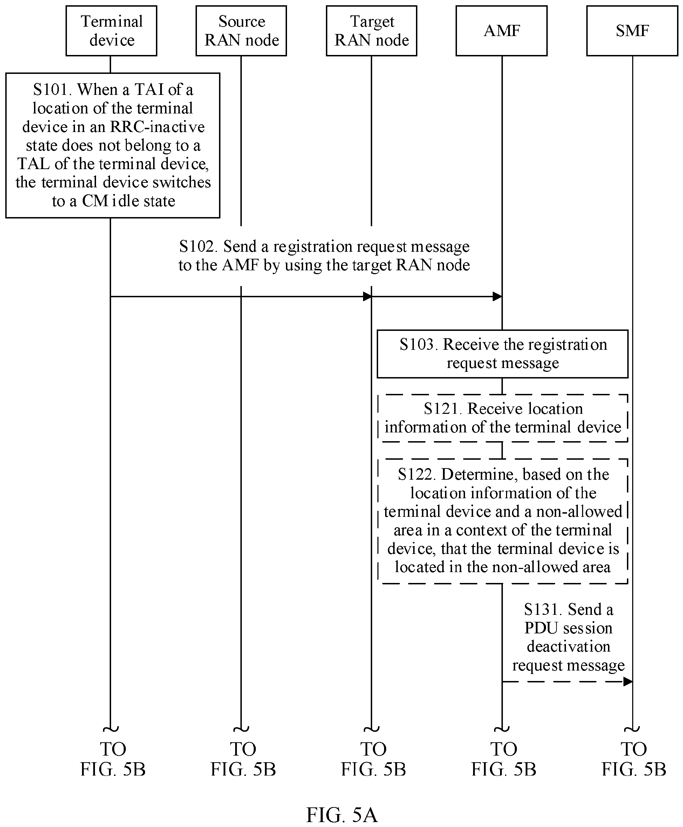

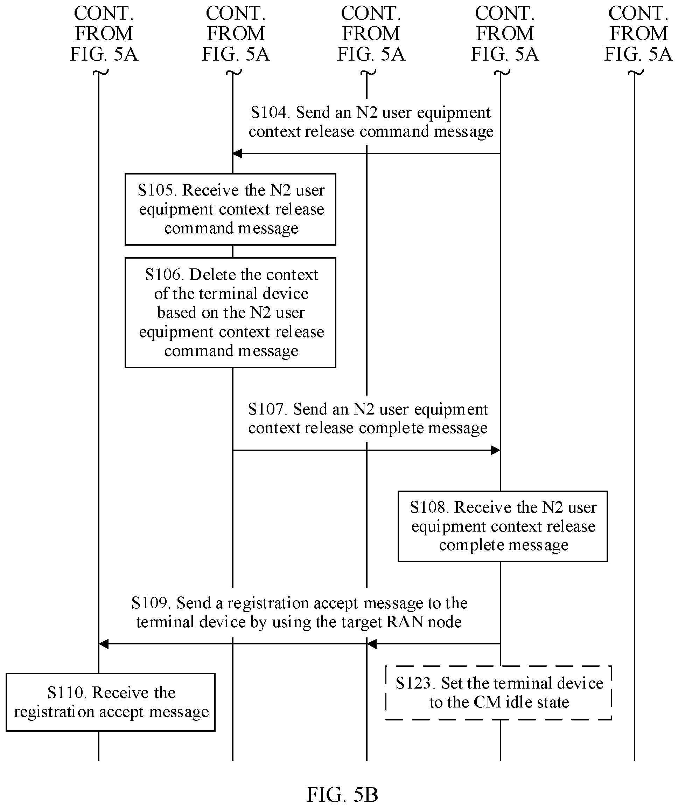

Optionally, in another implementation scenario of the foregoing embodiment, referring to FIG. 5A and FIG. 5B, after step S122, the method further includes step S131.

S131. The AMF sends a PDU session deactivation request message to an SMF, where the PDU session deactivation request message is used to request the SMF to deactivate a PDU session of the terminal device.

This implementation provides a specific implementation in which the AMF switches a status of the PDU session of the terminal device, so that the PDU session of the terminal device is in a deactivated state.

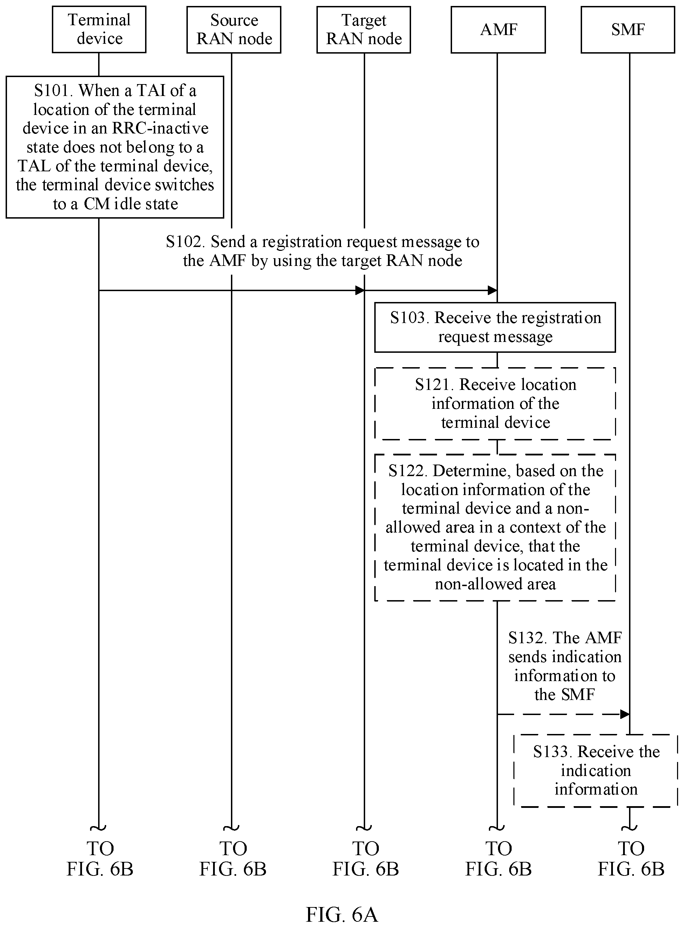

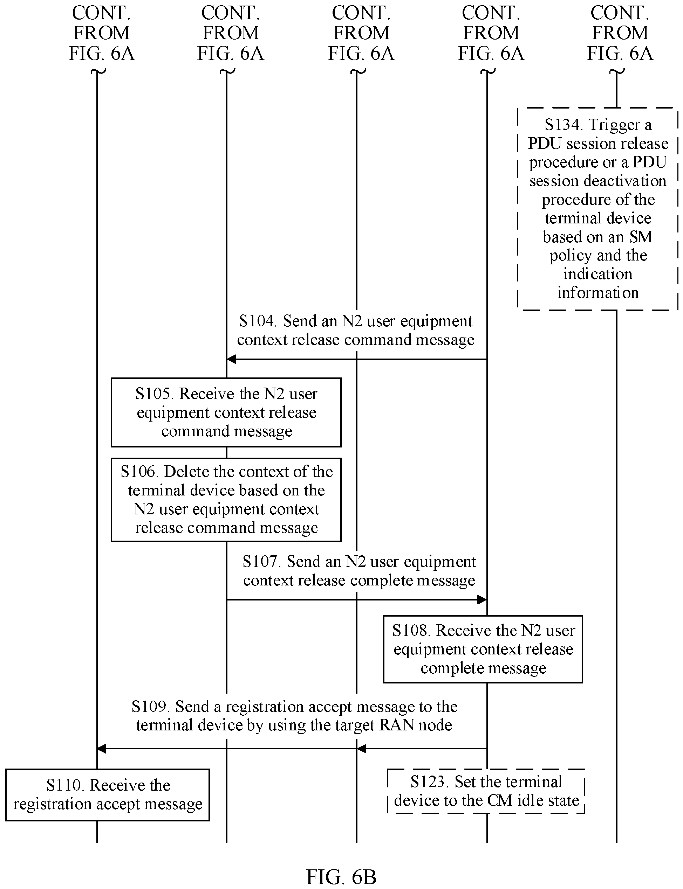

Optionally, in another implementation scenario of the foregoing embodiment, referring to FIG. 6A and FIG. 6B, after step S122, the method further includes steps S132 to S134.

S132. The AMF sends indication information to the SMF.

The indication information is used to indicate that the terminal device is located in the non-allowed area. For example, the indication information is a non-allowed area indication (for example, a non-allowed area indication).

S133. The SMF receives the indication information from the AMF

S134. The SMF triggers a PDU session release (PDU session release) procedure or a PDU session deactivation (PDU session deactivation) procedure of the terminal device based on a local session management (Session Management, SM) policy and the indication information.

For example, the SM policy may be: specifying PDU sessions corresponding to some NSSAI/DNNs for deactivation, or specifying PDU sessions corresponding to some NSSAI/DNNs for release.

The implementation described in steps S132 to S134 provides a specific implementation in which the AMF and the SMF switch a status of a PDU session of the terminal device, so that the PDU session of the terminal device is in a deactivated state or an idle state.

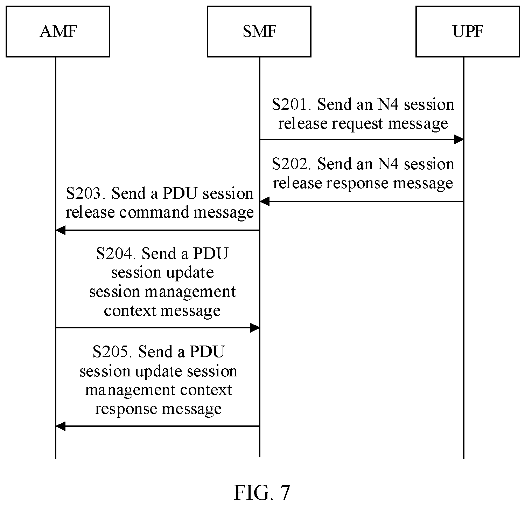

FIG. 7 is a schematic diagram of triggering a PDU session release procedure by an SMF. The method includes steps S201 to S205.

S201. The SMF sends an N4 session release request (N4 Session Release Request) message to a UPF, where the message includes an N4 session identifier (N4 Session ID) requested to be released.

S202. The UPF sends an N4 session release response (N4 Session Release Response) message to the SMF, to acknowledge the N4 session release request message, where the N4 session release response message includes the N4 session identifier.

S203. The SMF sends a PDU session release command (PDU Session Release Command) message to an AMF

S204. The AMF sends a PDU session update session management context (Nsmf_PDUSession_UpdateSMContext) message to the SMF, where the message includes a PDU session release acknowledgment (PDU Session Release Ack) message.

S205. The SMF sends a PDU session update session management context response (Nsmf_PDUSession_UpdateSMContext response) message to the AMF, so that the AMF releases context information related to a PDU session.

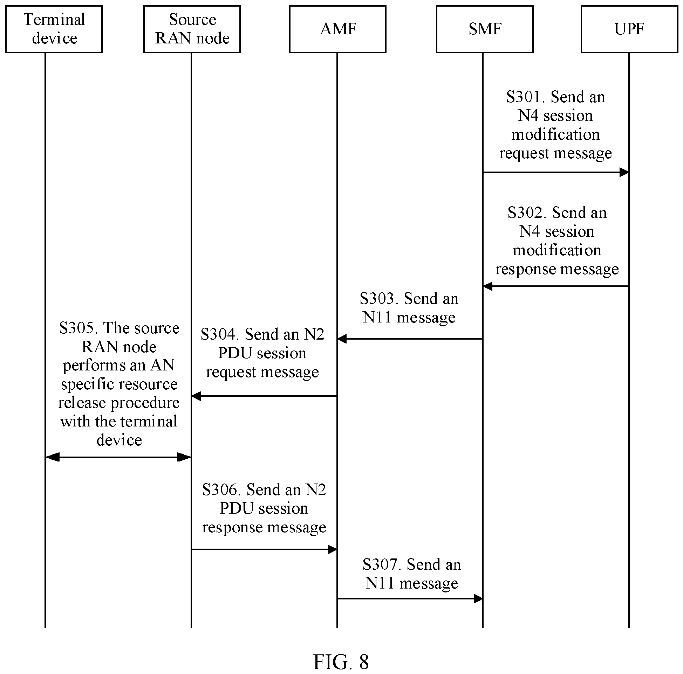

FIG. 8 is a schematic diagram of triggering a PDU session deactivation procedure by an SMF. The method includes steps S301 to S307.

S301. The SMF sends an N4 session modification request (N4 Session Modification Request) message to a UPF, where the message is used to instruct to release RAN node tunnel information of an N3 tunnel corresponding to a PDU session.

S302. The UPF sends an N4 session modification response (N4 Session Modification Response) message to the SMF.

S303. The SMF sends an N11 message to an AMF, where the N11 message includes an N2 session release request message, and the N2 session release request message is used to request to release a RAN node resource related to the PDU session.

S304. The AMF sends an N2 PDU session request (N2 PDU Session Request) message to a source RAN node, where the message includes the N2 session release request message.

S305. The source RAN node performs an AN specific resource release procedure with a terminal device, to release the RAN node resource related to the PDU session.

S306. The source RAN node sends an N2 PDU session response (N2 PDU Session Response) message to the AMF

S307. The AMF sends an N11 message to the SMF, where the message is used to acknowledge the message in step S303.

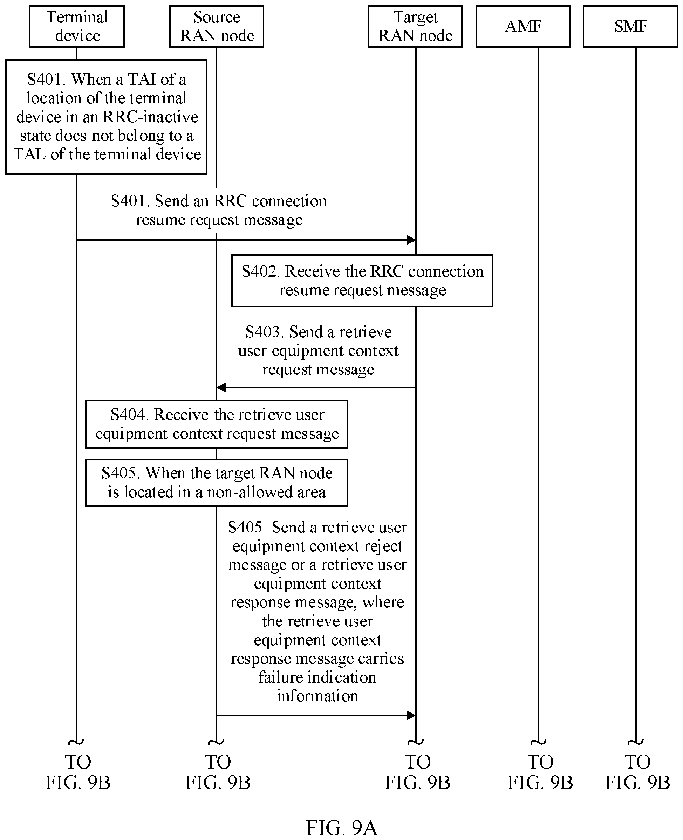

An embodiment of this application provides another communication method. The method may be applied to a case in which a terminal device in an RRC-inactive state moves from a first area to a second area. For related descriptions of the first area and the second area, refer to the embodiment shown in FIG. 3. Referring to FIG. 9A to FIG. 9C, the method includes the following steps.

S401. When a TAI of a location of the terminal device in the RRC-inactive state does not belong to a TAL of the terminal device, the terminal device sends an RRC connection resume request (RRC connection resume request) message to a target RAN node.

For the TAI of the location of the terminal device, the TAL of the terminal device, how to determine that the TAI of the location of the terminal device does not belong to the TAL of the terminal device, and the like, refer to the descriptions in step S101. Details are not described again.

In this case, the terminal device may remain in the RRC-inactive state.

The target RAN node may be located in a non-allowed area.

S402. The target RAN node receives the RRC connection resume request message from the terminal device.

S403. The target RAN node sends a retrieve user equipment context request (retrieve UE context request) message to a source RAN node.

The retrieve user equipment context request message is used to obtain context information of the terminal device.

S404. The source RAN node receives the retrieve user equipment context request message from the target RAN node.

Optionally, when the target RAN node is located in the non-allowed area, steps S405 to S413 are performed, or steps S414 to S422 are performed.

A manner of determining whether the target RAN node is located in the non-allowed area may include: determining, by the source RAN node based on locally stored information about the non-allowed area and location information of the target RAN node, whether the target RAN node is located in the non-allowed area.

The location information of the target RAN node may include the TAI or a CGI of the terminal device, or identification information of the target RAN node. In addition, the location information may be configured in advance through operation, administration, and maintenance (Operation Administration and Maintenance, OAM), may be obtained when an X2 interface connection is established between the RAN nodes, or may be carried in the retrieve user equipment context request.

S405. When the target RAN node is located in the non-allowed area, the source RAN node sends a retrieve user equipment context reject (retrieve UE context reject) message to the target RAN node; or when the target RAN node is located in the non-allowed area, the source RAN node sends a retrieve user equipment context response (retrieve UE context response) message to the target RAN node.

The retrieve user equipment context response message may carry failure indication information, and the failure indication information may be used to indicate a failure cause of obtaining the context information of the terminal device.

The retrieve user equipment context reject message may carry a reject cause, and the reject cause (for example, a non-allowed area indication) may be that the terminal device is located in the non-allowed area. In this case, the terminal device is located in a local data network (local area data network). This implementation provides a possible specific implementation of the reject cause.

S406. The source RAN node sends an N2 user equipment context release request (N2 UE context release request) message to an AMF

The N2 user equipment context release request message may be used to trigger an AN node UE context release procedure (UE context release in the AN). In addition, the N2 user equipment context release request message may carry a release request cause, and the release request cause may be that the terminal device is located in the non-allowed area. For example, a non-allowed area indication carried in the message is set to 1. This implementation provides possible specific implementations of the reject cause and the release request cause.

It should be noted that there is no execution sequence between steps S405 and S406.

S407. When the target RAN node receives the retrieve user equipment context reject message from the source RAN node, or when the target RAN node receives the retrieve user equipment context response message from the source RAN node, and the retrieve user equipment context response message carries the failure indication information used to indicate a failure in obtaining the context information, the target RAN node sends an RRC connection resume reject (RRC connection resume reject) message to the terminal device.

S408. The terminal device receives the RRC connection resume reject message from the target RAN node.

S409. The terminal device switches from a CM connected state to a CM idle state based on the RRC connection resume reject message.

When the terminal device receives the message, it indicates that an RRC connection cannot be resumed. Therefore, the terminal device may directly switch from the CM connected state to the CM idle state.

It should be noted that there is no execution sequence between steps S407 to S409 and steps S410 to S413.

S410. The AMF receives the N2 user equipment context release request message from the source RAN node.

S411. The AMF sends a PDU session deactivation request message to an SMF, where the PDU session deactivation request message is used to request the SMF to deactivate a PDU session of the terminal device.

S412. The AMF sends an N2 user equipment context release command (N2 UE context release command) message to the source RAN node.

It should be noted that there is no execution sequence between steps S411 and S412.

S413. The source RAN node receives the N2 user equipment context release command (N2 UE context release command) message from the AMF, and sends an N2 user equipment context release complete (N2 UE context release complete) message to the AMF

Steps S405 to S413 are a procedure in which the source RAN node rejects resumption of the RRC connection, and steps S414 to S422 are a procedure in which the source RAN node accepts resumption of the RRC connection.

S414. The source RAN node sends a retrieve user equipment context response message to the target RAN node, where the retrieve user equipment context response message includes the context information of the terminal device.

S415. When receiving the context information of the terminal device from the source RAN node, the target RAN node sends an RRC connection resume message to the terminal device.

The RRC connection resume message may be used to indicate that an RRC connection is successfully resumed.

Specifically, when receiving the user equipment context response message from the source RAN node, the target RAN node sends the RRC connection resume message to the terminal device.

S416. The target RAN node sends a path switch request (path switch request) message to the AMF, where the path switch request message carries location information of the terminal device.

The message is used to establish an N2 signaling connection between the target RAN node and the AMF.

S417. The AMF receives the path switch request message from the target RAN node.

S418. When determining, based on the location information of the terminal device, that the TAI of the location of the terminal device does not belong to the TAL of the terminal device, the AMF reallocates a TAL to the terminal device, and sends the reallocated TAL to the target RAN node.

Specifically, the AMF may send a path switch response (path switch response) message to the target RAN node, where the path switch response message includes the reallocated TAL. This implementation provides a possible implementation of a message used by the AMF to send the reallocated TAL to the target RAN node.

The AMF may reallocate the TAL to the terminal device before the AMF receives a registration request message from the terminal device.

S419. The target RAN node receives the path switch response message from the AMF

S420. The target RAN node sends a user equipment context release (UE context release) message to the source RAN node, where the user equipment context release message is used to instruct the source RAN node to release the context information of the terminal device.

S421. The terminal device sends the registration request message to the AMF

S422. The AMF sends a registration accept message to the terminal device.

The registration accept message carries the TAL reallocated to the terminal device.

According to the communication method provided in this embodiment of this application, when the TAI of the location of the terminal device in the RRC-inactive state does not belong to the TAL of the terminal device, it indicates that the terminal device has moved out of an area defined by the TAL. The terminal device first attempts to resume the RRC connection, and the source RAN node may reject or accept the request. When the source RAN node rejects the request, on one hand, the source RAN node notifies, by using the target RAN node, the terminal device that the source RAN node rejects resumption of the RRC connection of the terminal device; on the other hand, the target RAN node initiates an N2 release procedure by using the AMF. When the source RAN node accepts the request, the target RAN node notifies the terminal device that the request of the terminal device is accepted, and then the terminal device initiates the registration request to obtain the TAL of the terminal device from the AMF According to the foregoing processing manner, the terminal device in the RRC-inactive state performs a mobility-triggered TAU.

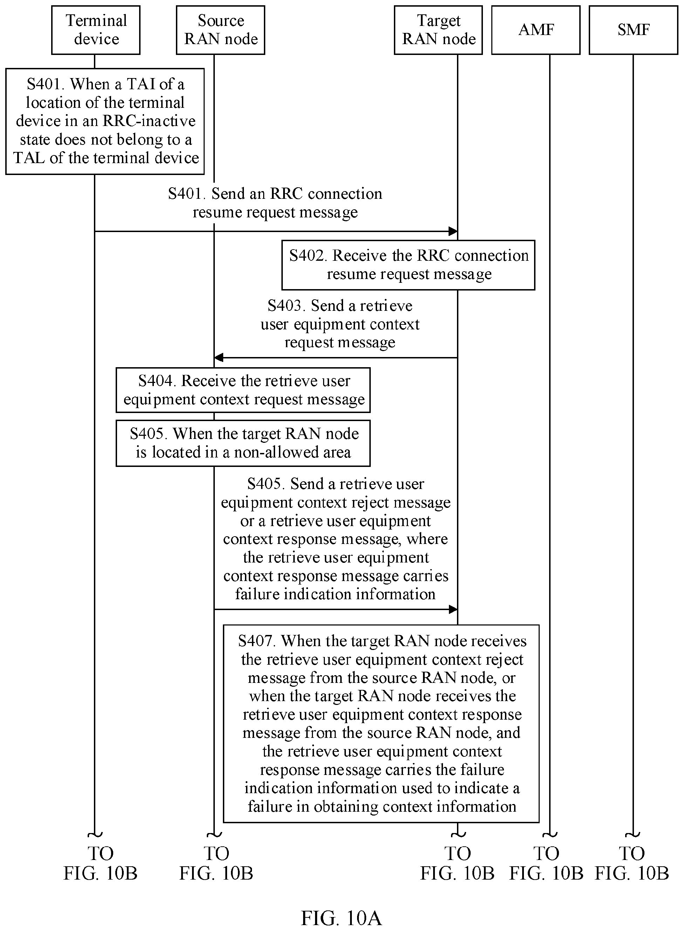

Optionally, referring to FIG. 10A to FIG. 10C, when the path switch response message includes the TAL reallocated to the terminal device, after step S419, the method may further include steps S431 and S432.

S431. The target RAN node generates an RNA based on the TAL reallocated to the terminal device.

The TAL of the terminal device may be sent by the AMF to the target RAN node.

For example, the target RAN node may generate the RNA based on the TAL received from the AMF.

Further, some or all of TAs in the TAL may be selected to generate the RNA.

S432. The target RAN node sends the RNA to the terminal device.

Specifically, the target RAN node may send the RNA to the terminal device by using an RRC message. The RRC message may be an RRC connection release (RRC connection release) message.

The implementation described in steps S431 and S432 provides a specific implementation in which the target RAN node generates the RNA for the terminal device, so that the terminal device can obtain an updated RNA.

Optionally, referring to FIG. 10A to FIG. 10C, when the target RAN node is located in the non-allowed area, and after the target RAN node receives the context information of the terminal device from the source RAN node in step S415, in other words, after the target RAN node receives the user equipment context response message from the source RAN node, the method further includes step S433.

S433. The target RAN node triggers an AN node UE context release procedure (UE context release in the AN), and deletes the context information of the terminal device after the procedure is completed.

Specifically, the target RAN node may determine, according to a policy, to switch the terminal device to a CM idle state, and then trigger the AN node UE context release procedure (UE context release in the AN). For example, the policy may be: When the terminal device is located in the non-allowed area, a status of the terminal device cannot be set to the RRC-inactive state.

According to this implementation, the target RAN node deletes a context of the terminal device.

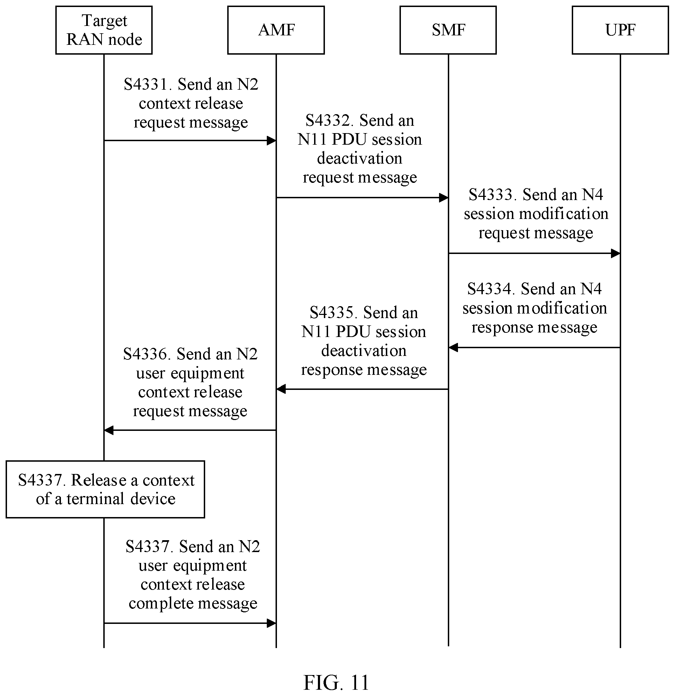

Specifically, referring to FIG. 11, that the target RAN node triggers an AN node UE context release procedure (UE context release in the AN) may include the following steps.

S4331. The target RAN node sends an N2 context release request (N2 UE Context Release Request) message to the AMF.

S4332. The AMF sends an N11 PDU session deactivation request (N11 PDU session deactivation Request) message to an SMF.

S4333. The SMF sends an N4 session modification request (N4 Session Modification Request) message to a UPF.

S4334. The UPF sends an N4 session modification response (N4 Session Modification Response) message to the SMF.

S4335. The SMF sends an N11 PDU session deactivation response (N11 PDU session deactivation Response) message to the AMF

S4336. The AMF sends an N2 user equipment context release request (N2 UE Context Release Request) message to the target RAN node.

S4337. The target RAN node releases the context of the terminal device, and sends an N2 user equipment context release complete (N2 UE Context Release Complete) message to the AMF

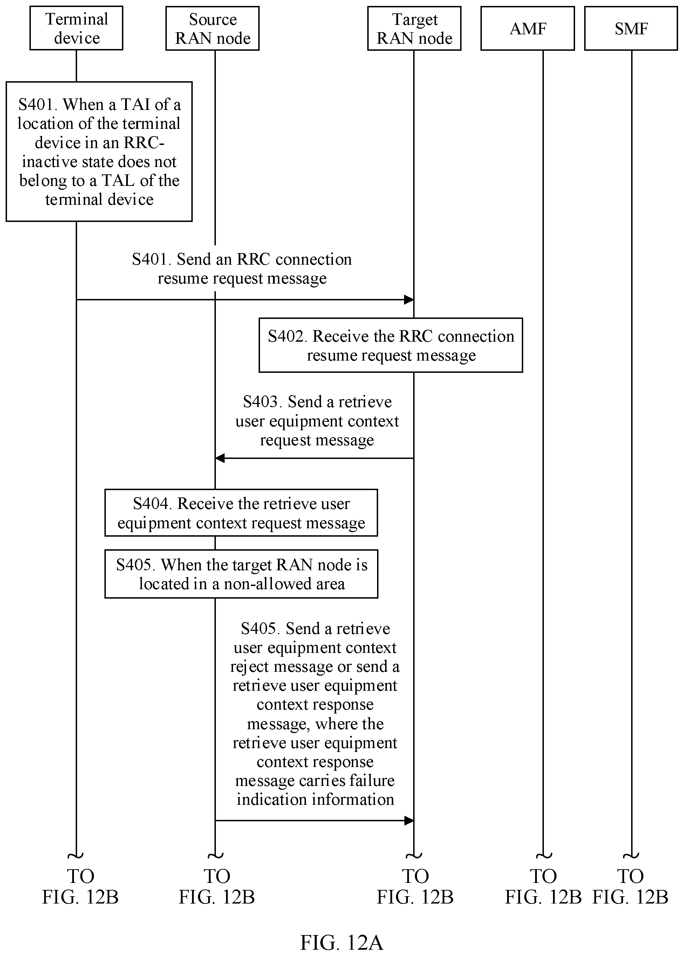

Optionally, in an implementation scenario of the foregoing embodiment, referring to FIG. 12A to FIG. 12C, after the AMF determines that the TAI of the location of the terminal device does not belong to the TAL of the terminal device in step S418, the method further includes steps S434 to S436.

S434. When the target RAN node is located in the non-allowed area, the AMF sends indication information (for example, a non-allowed area indication) to an SMF, where the indication information is used to indicate that the terminal device is located in the non-allowed area.

Specifically, the indication information may be sent to the SMF by using an event exposure service (Namf_EventExposure) provided by the AMF

S435. The SMF receives the indication information from the AMF

S436. The SMF triggers a PDU session release procedure or a PDU session deactivation procedure of the terminal device based on a local SM policy and the indication information.

For details, refer to the descriptions in FIG. 7 and FIG. 8. Details are not described again.

It should be noted that steps S434 to S436 correspond to steps S132 to S134.

The implementation described in steps S434 to S436 provides a specific implementation in which the AMF and the SMF switch a status of a PDU session of the terminal device, so that when the target RAN node is located in the non-allowed area, the PDU session of the terminal device is in a deactivated state or an idle state.

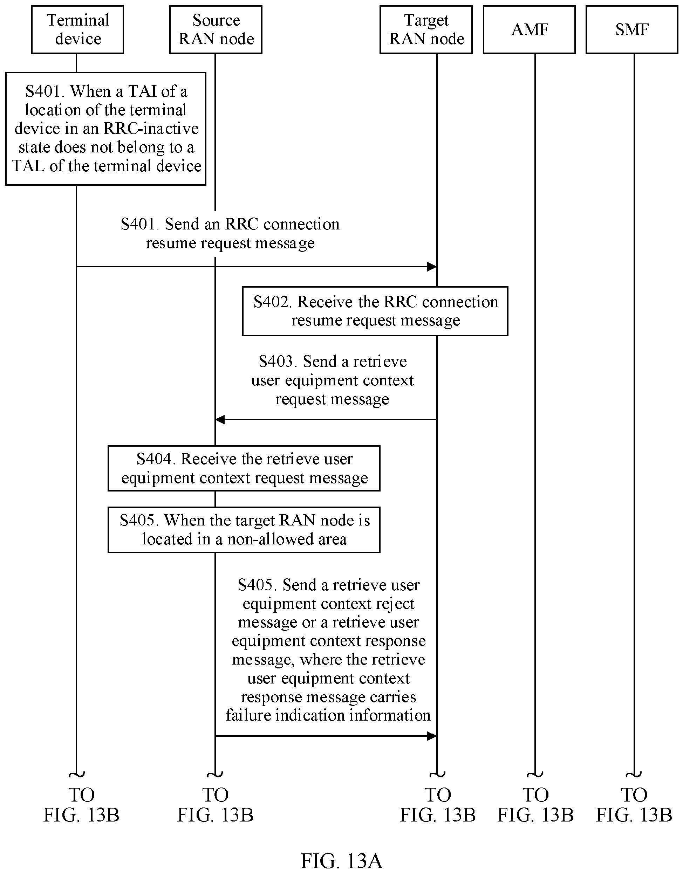

Optionally, in another implementation scenario of the foregoing embodiment, referring to FIG. 13A to FIG. 13C, after the AMF determines that the TAI of the location of the terminal device does not belong to the TAL of the terminal device in step S418, the method further includes step S437.

S437. The AMF triggers an AN node UE context release procedure (UE context release in the AN).

According to this implementation, when the TAI of the location of the terminal device does not belong to the TAL of the terminal device, the target RAN releases a UE context of the terminal device.

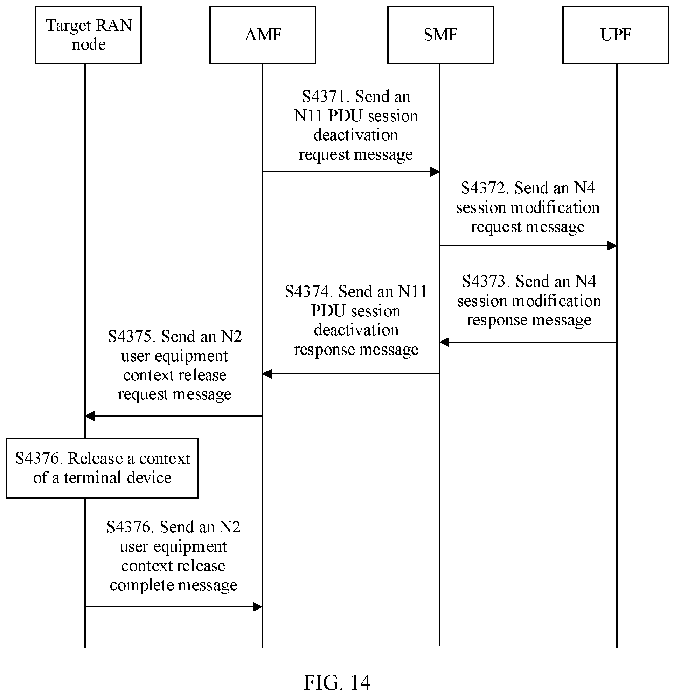

Specifically, referring to FIG. 14, that the AMF triggers an AN node UE context release procedure (UE context release in the AN) may include the following steps.

S4371. The AMF sends an N11 PDU session deactivation request (N11 PDU session deactivation Request) message to an SMF.

S4372. The SMF sends an N4 session modification request (N4 Session Modification Request) message to a UPF.

S4373. The UPF sends an N4 session modification response (N4 Session Modification Response) message to the SMF.

S4374. The SMF sends an N11 PDU session deactivation response (N11 PDU session deactivation Response) message to the AMF

S4375. The AMF sends an N2 user equipment context release request (N2 UE Context Release Request) message to the target RAN node.

S4376. The target RAN node releases the context of the terminal device, and sends an N2 user equipment context release complete (N2 UE Context Release Complete) message to the AMF

The following describes the foregoing communication method by using specific examples.

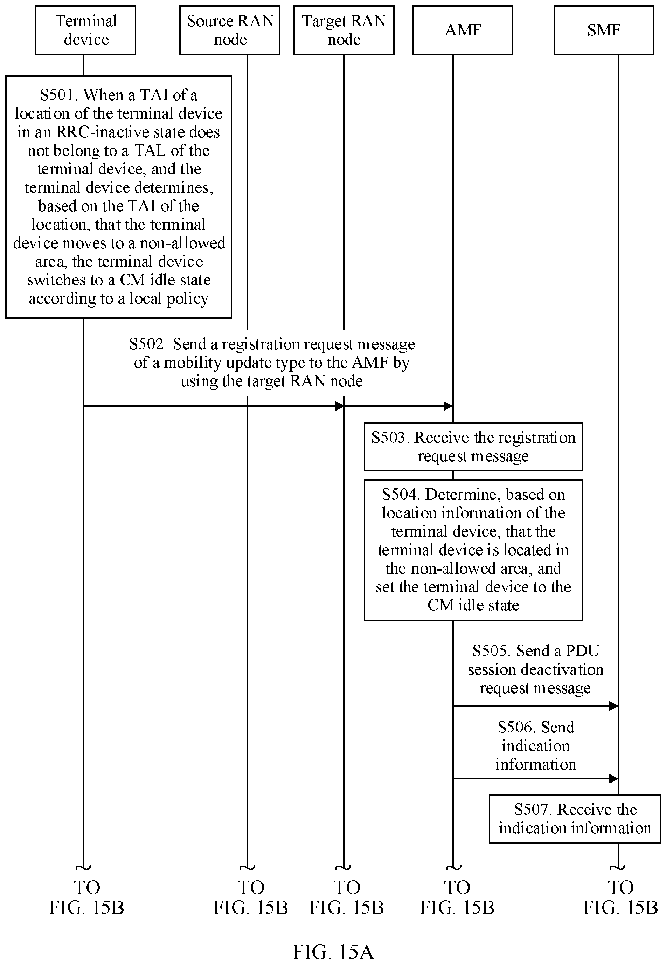

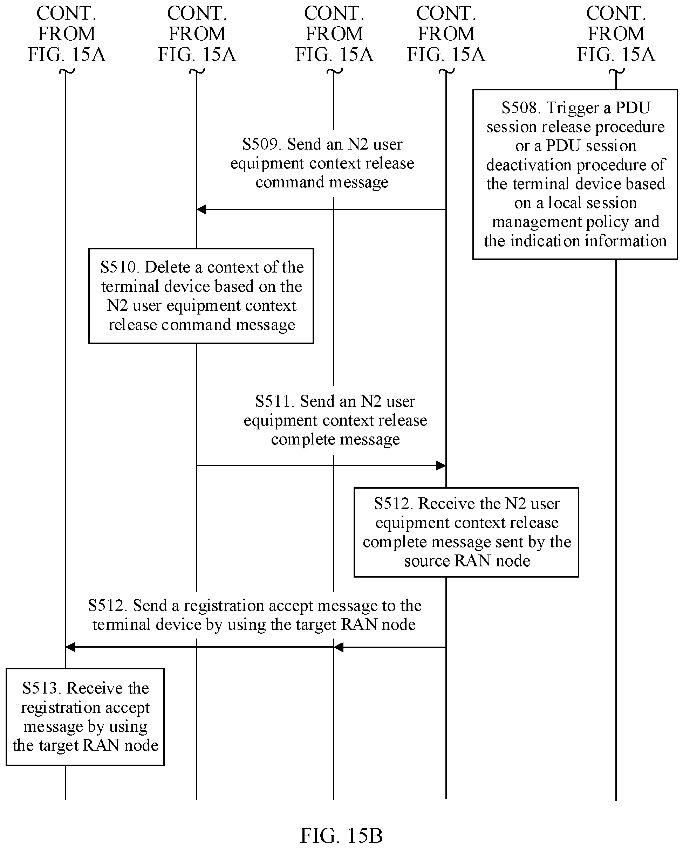

An embodiment of this application provides a communication method. The method may be applied to a case in which, when a terminal device in an RRC-inactive state moves from an allowed area to a non-allowed area, and a TAI obtained from a network side does not belong to a TAL of the terminal device, the terminal device performs a TAU. Referring to FIG. 15A and FIG. 15B, the method includes the following steps.

S501. When a TAI of a location of the terminal device in the RRC-inactive state does not belong to the TAL of the terminal device, and the terminal device determines, based on the TAI of the location, that the terminal device moves to the non-allowed area, the terminal device switches to a CM idle state according to a local policy.

Specifically, when the terminal device enters the non-allowed area, the terminal device switches to the CM idle state because the terminal device cannot perform a normal service.

The local policy may be solidified in the terminal device, or may be obtained by the terminal device from a PCF by using an AMF, for example, may be obtained by using a registration accept (registration accept) message or a user equipment configuration update command (UE configuration update command) message.

For detailed descriptions of this step, refer to S101. For a manner in which the terminal device determines, based on the TAI of the location, that the terminal device moves to the non-allowed area, refer to the descriptions in step S101.

S502. The terminal device sends a registration request message of a mobility update type to the AMF by using a target RAN node, where the registration request message is used to request to allocate a TAL to the terminal device.

For detailed descriptions of this step, refer to S102. For descriptions of the mobility update type, refer to the descriptions in step S101. Details are not described again.

S503. The AMF receives an initial user equipment message (initial UE message) from the target RAN node, where the initial user equipment message includes the registration request message and location information of the terminal device.

This step is a combination of steps S103 and S121. For descriptions of the initial user equipment message and the location information of the terminal device, refer to step S121. Details are not described again.

S504. The AMF determines, based on the location information of the terminal device, that the terminal device is located in the non-allowed area, and sets the terminal device to the CM idle state.

This step is a combination of steps S122 and S123, and details are not described again.

Optionally, after S504 is performed, an implementation of S505 or an implementation of S506 to S508 may be selectively performed.

S505. The AMF sends a PDU session deactivation request message to an SMF, where the PDU session deactivation request message is used to request the SMF to deactivate a PDU session of the terminal device.

For detailed descriptions of this step, refer to S131.

This implementation provides a specific implementation in which the AMF switches a status of the PDU session of the terminal device, so that the PDU session of the terminal device is in a deactivated state.

S506. The AMF sends indication information to an SMF, where the indication information (for example, a non-allowed area indication) is used to indicate that the terminal device is located in the non-allowed area.

For detailed descriptions of this step, refer to S132.

S507. The SMF receives the indication information from the AMF

For detailed descriptions of this step, refer to S133.

S508. The SMF triggers a PDU session release (PDU session release) procedure or a PDU session deactivation (PDU session deactivation) procedure of the terminal device based on a local session management (Session Management, SM) policy and the indication information.

For detailed descriptions of this step, refer to S134. Details are not described again.

The implementation described in steps S506 to S508 provides a specific implementation in which the AMF and the SMF switch a status of a PDU session of the terminal device, so that the PDU session of the terminal device is in a deactivated state or an idle state.

S509. The AMF sends an N2 user equipment context release command (N2 UE context release command) message to a source RAN node, where the message includes a release cause, and the release cause is that the terminal device is located in the non-allowed area (non-allowed area).

For detailed descriptions of this step, refer to S104. Details are not described again.

S510. The source RAN node receives the N2 user equipment context release command message sent by the AMF, and deletes a context (context) of the terminal device based on the N2 user equipment context release command message.

This step is a combination of steps S105 and S106, and details are not described again.

S511. The source RAN node sends an N2 user equipment context release complete (N2 UE context release complete) message to the AMF

For detailed descriptions of this step, refer to S107.

S512. The AMF receives the N2 user equipment context release complete message sent by the source RAN node, and sends a registration accept to the terminal device by using the target RAN node, where the registration accept message includes the reallocated TAL.

This step is a combination of steps S108 and S109, and details are not described again.

S513. The terminal device receives, by using the target RAN node, the registration accept message sent by the AMF

For detailed descriptions of this step, refer to S110.

According to steps S501 and S504, a CM status between the terminal device and a network side device is the CM idle state. According to step S508, a status of a PDU session between the terminal device and the network side device is an inactive state.

According to the communication method provided in this embodiment of this application, when the TAI of the location of the terminal device in the RRC-inactive state does not belong to the TAL, it indicates that the terminal device has moved out of a TAL boundary, and therefore, a TAU is performed. In this case, the terminal device switches to the CM idle state. The terminal device sends the registration request message to the AMF to request the TAL of the location. The AMF sends the N2 user equipment context release command message to the source RAN node, to release the context of the terminal device that is in the source RAN node. After receiving, from the source RAN node, a response message of releasing the context, the AMF sends the registration accept message to the terminal device by using the target RAN node. The registration accept message includes the TAL reallocated to the terminal device. The terminal device in the RRC-inactive state performs a mobility-triggered TAU. In addition, the CM status between the terminal device and the network side device is the CM idle state, and the status of the PDU session between the terminal device and the network side device is the inactive state.

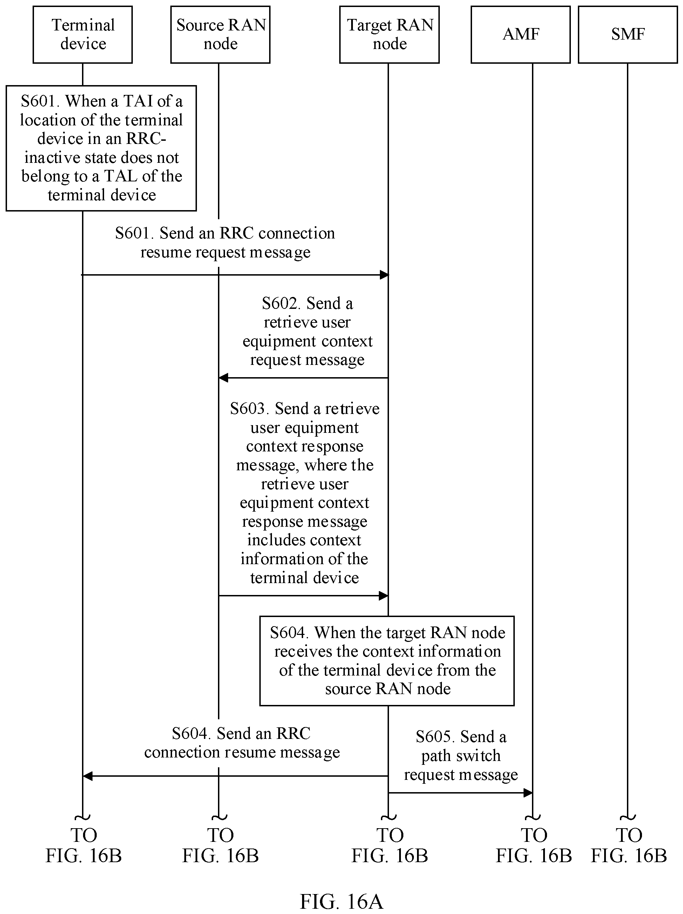

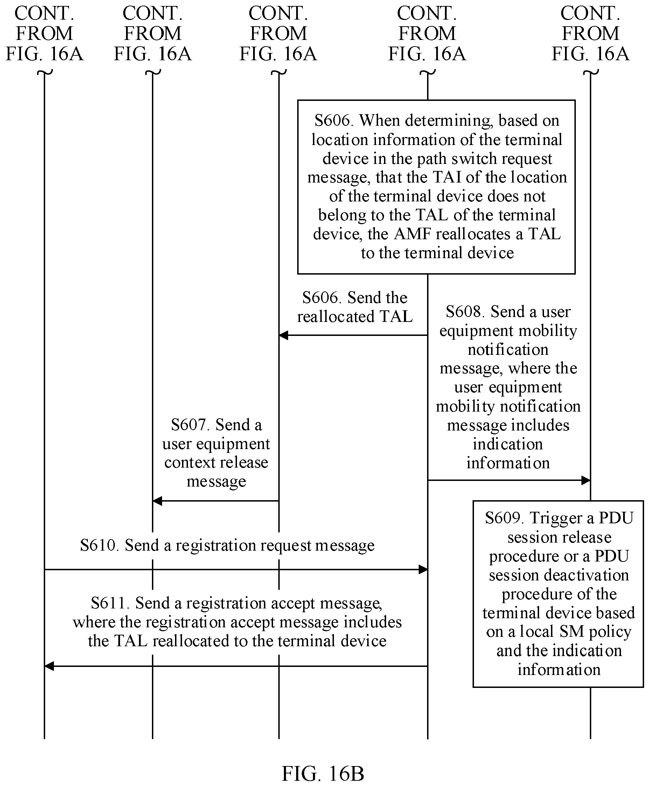

An embodiment of this application provides a communication method. The method may be applied to a case in which, when a terminal device in an RRC-inactive state moves from an allowed area to a non-allowed area, and a TAI of a location of the terminal device does not belong to a TAL of the terminal device, the terminal device performs a TAU. Referring to FIG. 16A and FIG. 16B, the method includes the following steps.

S601. When the TAI of the location of the terminal device in the RRC-inactive state does not belong to the TAL of the terminal device, the terminal device sends an RRC connection resume request (RRC connection resume request) message to a target RAN node.

For detailed descriptions of this step, refer to S401. Details are not described again.

S602. The target RAN node receives the RRC connection resume request message from the terminal device, and sends a retrieve user equipment context request (retrieve UE context request) message to a source RAN node, where the retrieve user equipment context request message is used to obtain context information of the terminal device.

This step is a combination of steps S402 and S403, and details are not described again.

S603. The source RAN node receives the retrieve user equipment context request message from the target RAN node, and sends a retrieve user equipment context response message to the target RAN node, where the retrieve user equipment context response message includes the context information of the terminal device.

This step is a combination of steps S404 and S414, and details are not described again.

S604. When receiving the context information of the terminal device from the source RAN node, the target RAN node sends an RRC connection resume message to the terminal device, to indicate that an RRC connection is successfully resumed.

For detailed descriptions of this step, refer to S415. Details are not described again.

S605. The target RAN node sends a path switch request (path switch request) message to an AMF, where the path switch request message carries location information of the terminal device.

For detailed descriptions of this step, refer to S416. Details are not described again.

S606. When receiving the path switch request message from the target RAN node, and determining, based on the location information of the terminal device in the path switch request message, that the TAI of the location of the terminal device does not belong to the TAL of the terminal device, the AMF reallocates a TAL to the terminal device, and sends a path switch response (path switch response) message to the target RAN node, where the path switch response message includes the reallocated TAL.

This step is a combination of steps S417 and S418, and details are not described again.

S607. The target RAN node receives the path switch response message from the AMF, and sends a user equipment context release (UE context release) message to the source RAN node, where the user equipment context release message is used to instruct the source RAN node to release the context information of the terminal device.

This step is a combination of steps S419 and S420, and details are not described again.

S608. When the target RAN node is located in the non-allowed area, the AMF sends a user equipment mobility notification (UE mobility notification) message to an SMF, where the message includes indication information, and the indication information (for example, a non-allowed area indication) is used to indicate that the terminal device is located in the non-allowed area.

For detailed descriptions of this step, refer to S434. Details are not described again.

S609. The SMF receives the indication information from the AMF, and triggers a PDU session release procedure or a PDU session deactivation procedure of the terminal device based on a local SM policy and the indication information.

This step is a combination of steps S435 and S436, and details are not described again.

According to step S609, a status of a PDU session between the terminal device and the SMF is an inactive state.

S610. The terminal device sends a registration request message to the AMF

For detailed descriptions of this step, refer to S412. Details are not described again.

S611. The AMF sends a registration accept message to the terminal device.

The registration accept message carries the TAL reallocated to the terminal device.

For detailed descriptions of this step, refer to S413. Details are not described again.

According to the communication method provided in this embodiment of this application, when the TAI of the location of the terminal device in the RRC-inactive state does not belong to the TAL of the terminal device, the terminal device initiates a RAN-node-level-registration-update (RAN-level-registration-update) procedure to the target RAN node. The target RAN node successfully obtains a context of the user equipment from the source RAN node, and is restored to an RRC connected state. The target RAN node initiates a path switch procedure to the AMF, and sends the reallocated TAL to the terminal device through the procedure. The terminal device in the RRC-inactive state performs a mobility-triggered TAU. The AMF learns that the terminal device enters the non-allowed area. An implementation may be used. To be specific, the AMF maintains a CM status of the terminal device as a CM connected state, and notifies the SMF of an event that the terminal device enters the non-allowed area; the SMF determines to release/not to release the PDU session or deactivate the PDU session; and the target RAN node maintains the terminal device in the RRC-inactive state. Alternatively, another implementation may be used. To be specific, the AMF maintains a CM status of the terminal device as a CM connected state, and notifies the SMF of an event that the terminal device enters the non-allowed area; the SMF determines to release/not to release the PDU session or deactivate the PDU session; and the target RAN node or the AMF initiates an N2 release procedure according to a policy, and switches the terminal device to a CM idle state.

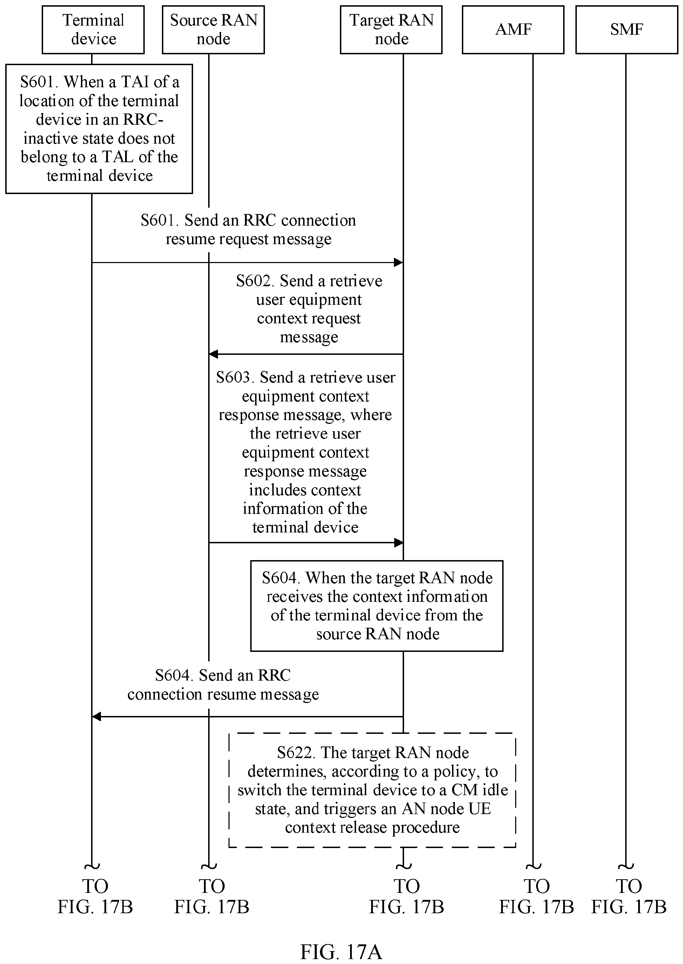

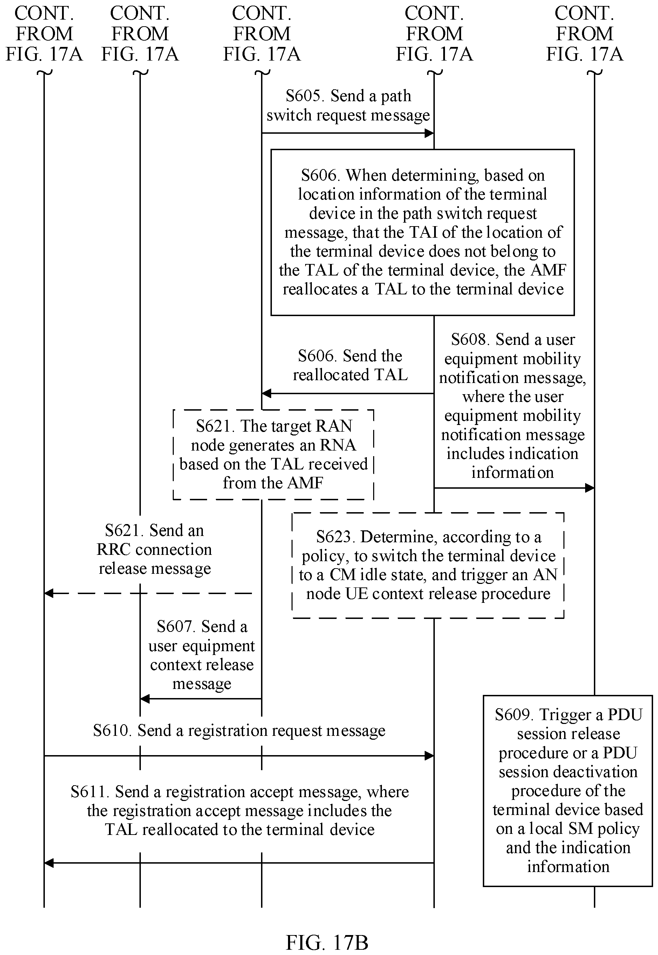

Optionally, referring to FIG. 17A and FIG. 17B, after the AMF sends the TAL to the target RAN node in step 606, the method may further include step S621.

S621. The target RAN node generates an RNA based on the TAL received from the AMF, and sends an RRC connection release (RRC connection release) message to the terminal device, where the RRC connection release message includes the RNA.

This step is a combination of steps S431 and S432, and details are not described again.

According to step S621, CM statuses maintained by the terminal device and the AMF for the terminal device are both the CM connected state. According to step S621, an RRC status between the terminal device and the target RAN node is the RRC-inactive state.

This implementation provides a possible implementation of a message used by the target RAN to send the RNA to the terminal device.

Optionally, referring to FIG. 17A and FIG. 17B, after the target RAN node receives the user equipment context response message from the source RAN node in step S604, the method may further include step S622.

S622. The target RAN node determines, according to a policy, to switch the terminal device to the CM idle state, and triggers an AN node UE context release procedure (UE context release in the AN).

For detailed descriptions of this step, refer to S433. For the triggering an N2 context release procedure, refer to the descriptions in step S433. Details are not described again.

According to step S622, a CM status between the terminal device and the target RAN node is the CM connected state.

According to this implementation, the target RAN node deletes a context of the terminal device.

Optionally, referring to FIG. 17A and FIG. 17B, after the AMF determines, based on the location information of the terminal device, that the TAI of the current location of the terminal device does not belong to the current tracking area list TAL in step S606, the method may further include step S612.

S623. The AMF determines, according to a policy, to switch the terminal device to the CM idle state, and triggers an AN node UE context release procedure (UE context release in the AN).

For detailed descriptions of this step, refer to S437. For the triggering an AN node UE context release procedure (UE context release in the AN), refer to the descriptions in step S437. Details are not described again.

According to step S623, a CM status between the terminal device and the AMF is the CM idle state.

According to this implementation, when the TAI of the location of the terminal device does not belong to the TAL of the terminal device, the target RAN releases the UE context of the terminal device.

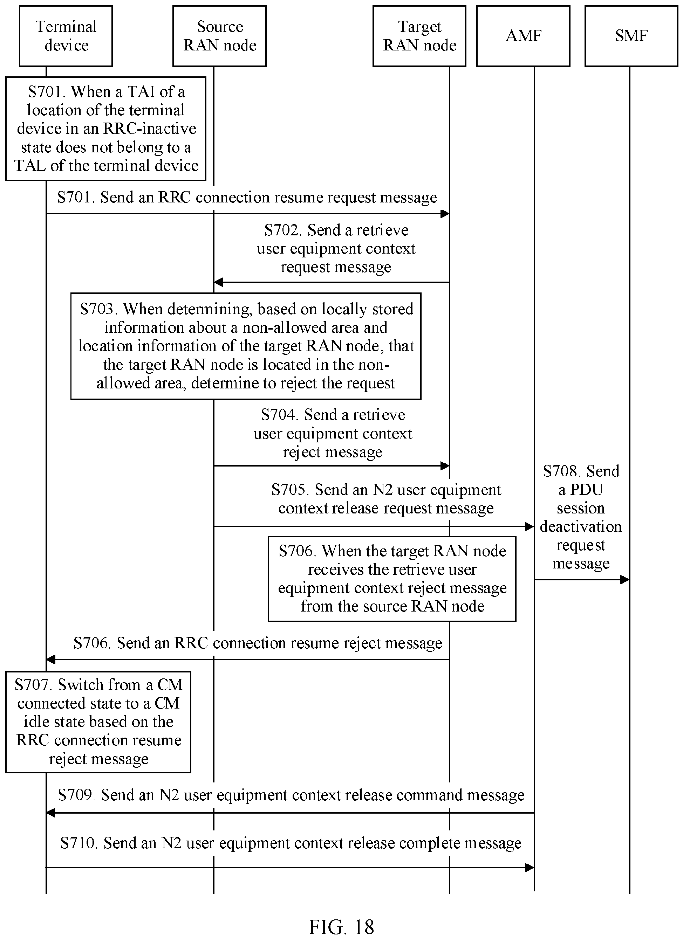

An embodiment of this application provides a communication method. The method may be applied to a case in which, when a terminal device in an RRC-inactive state moves from an allowed area to a non-allowed area, and a TAI of the terminal device does not belong to a TAL of the terminal device, the terminal device performs a TAU. Referring to FIG. 18, the method includes the following steps.

S701. When a TAI of a location of the terminal device in the RRC-inactive state does not belong to the TAL of the terminal device, the terminal device sends an RRC connection resume request (RRC connection resume request) message to a target RAN node.

This step is the same as step S601, and details are not described again.

S702. The target RAN node receives the RRC connection resume request message from the terminal device, and sends a retrieve user equipment context request (retrieve UE context request) message to a source RAN node, where the retrieve user equipment context request message is used to obtain context information of the terminal device.

This step is the same as S602, and details are not described again.

S703. The source RAN node receives the retrieve user equipment context request message from the target RAN node, and when determining, based on locally stored information about the non-allowed area and location information of the target RAN node, that the target RAN node is located in the non-allowed area, determines to reject the request.

For detailed descriptions of this step, refer to S404.

S704. The source RAN node sends a retrieve user equipment context reject (retrieve UE context reject) message to the target RAN node, where the retrieve user equipment context reject message carries a reject cause, and the reject cause (for example, a non-allowed area indication) is that the terminal device is located in the non-allowed area.

For detailed descriptions of this step, refer to S405. Details are not described again.

S705. The source RAN node sends an N2 user equipment context release request (N2 UE context release request) message to an AMF, to initiate an N2 release procedure, where the message carries a release request cause, and the release request cause (for example, a non-allowed area indication) is that the terminal device is located in the non-allowed area.

For detailed descriptions of this step, refer to S406. Details are not described again.

S706. When receiving the retrieve user equipment context reject message from the source RAN node, the target RAN node sends an RRC connection resume reject (RRC connection resume reject) message to the terminal device.

For detailed descriptions of this step, refer to S407.

S707. The terminal device receives the RRC connection resume reject message from the target RAN node, and switches from a CM connected state to a CM idle state based on the RRC connection resume reject message.

This step is a combination of steps S408 and S409, and details are not described again.

S708. The AMF receives the N2 user equipment context release request message from the source RAN node, and sends a PDU session deactivation request message to an SMF, where the PDU session deactivation request message is used to request the SMF to deactivate a PDU session of the terminal device.

This step is a combination of steps S410 and S411.

S709. The AMF sends an N2 user equipment context release command (N2 UE context release command) message to the source RAN node.

For detailed descriptions of this step, refer to S412.

S710. The source RAN node receives the N2 user equipment context release command (N2 UE context release command) message from the AMF, and sends an N2 user equipment context release complete (N2 UE context release complete) message to the AMF

For detailed descriptions of this step, refer to S413.

According to the communication method provided in this embodiment of this application, when the TAI of the location of the terminal device in the RRC-inactive state does not belong to the TAL of the terminal device, the terminal device initiates a RAN-node-level-registration-update (RAN-node-level-registration-update) procedure to the target RAN node. The target RAN node requests to obtain a context of the user equipment from the source RAN node. If finding that the terminal device enters the non-allowed area, the source RAN node rejects the request of the target RAN node. An implementation may be used. To be specific, the source RAN node rejects access of the terminal device to a network, so that the terminal device enters the CM idle state, and the PDU session of the terminal device is in an inactive state. Alternatively, another implementation may be used. To be specific, the source RAN node initiates the N2 release procedure, to release N2 and N3 connections between the source RAN node and the AMF/a UPF, switch the terminal device to the CM idle state, and enable the PDU session of the terminal device to be in an inactive state.

An embodiment of this application provides a terminal device, configured to perform the foregoing communication methods. In this embodiment of this application, the terminal device may be divided into function modules based on the foregoing method examples. For example, function modules corresponding to functions may be obtained through division, or two or more functions may be integrated into one processing module. The integrated module may be implemented in a form of hardware, or may be implemented in a form of a software function module. It should be noted that, in this embodiment of this application, module division is an example, and is merely logical function division. In an actual implementation, another division manner may be used.

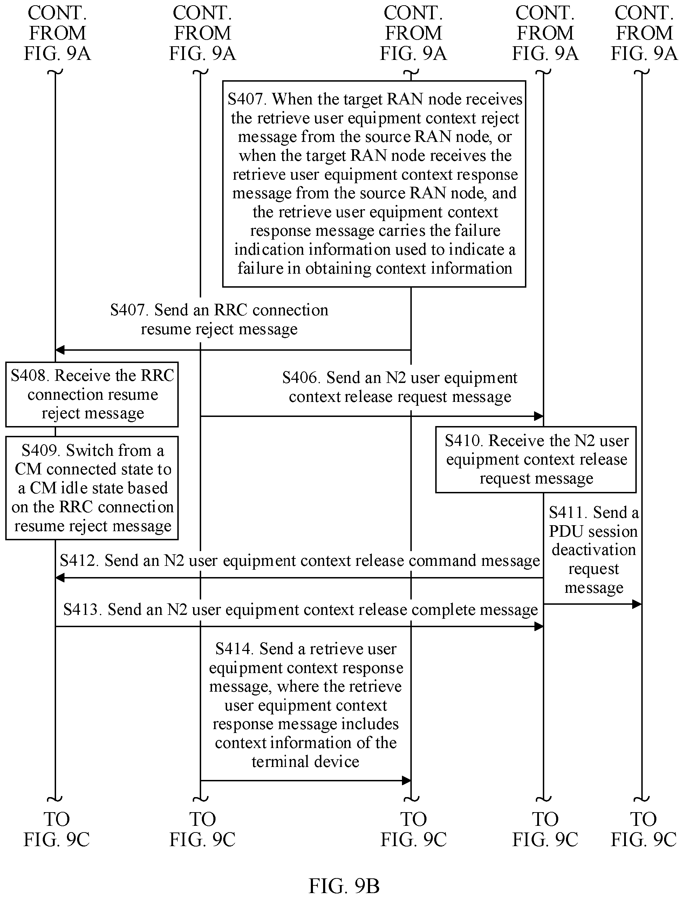

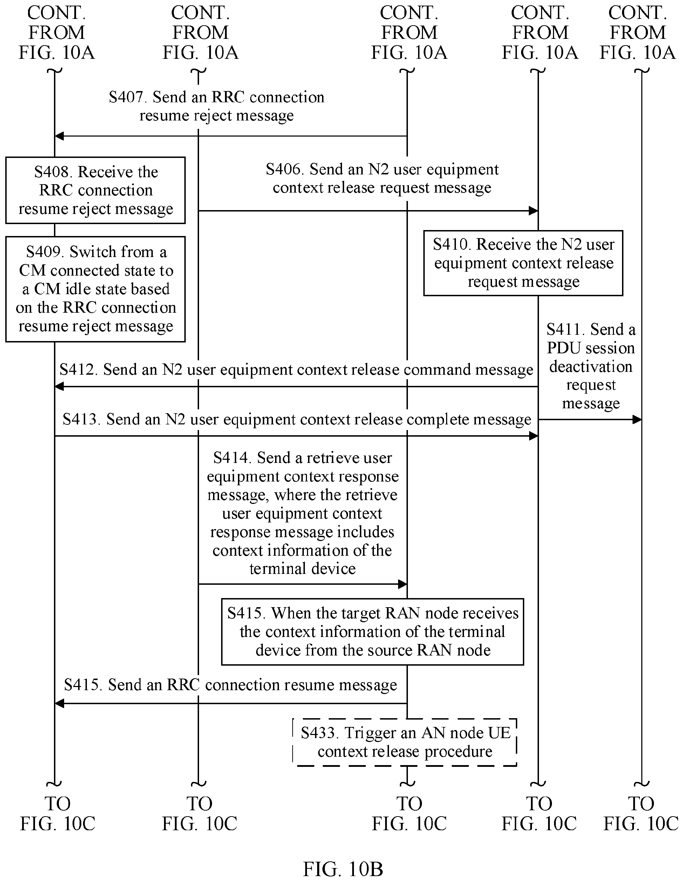

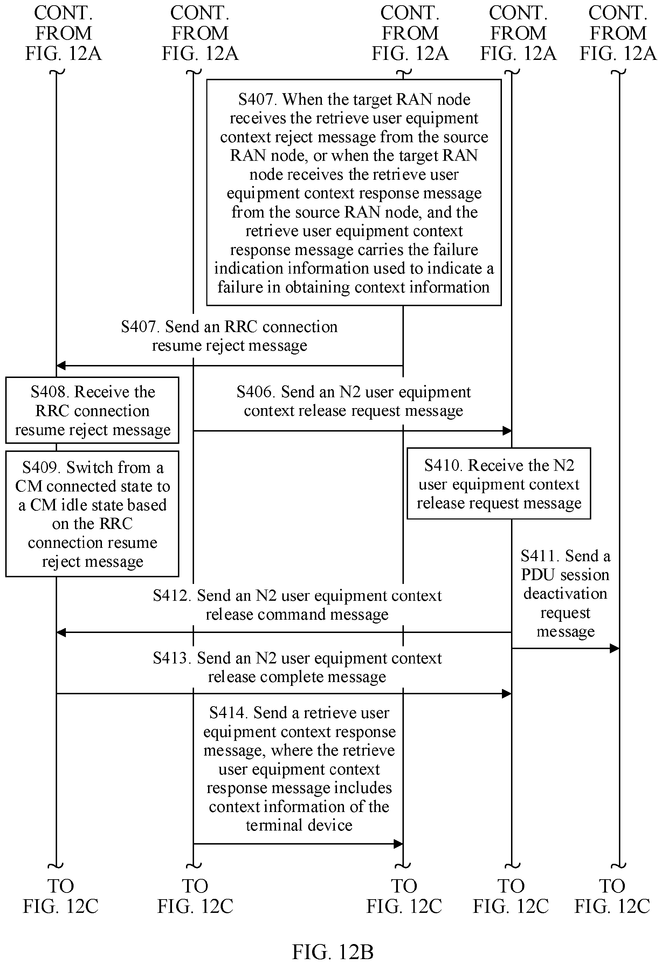

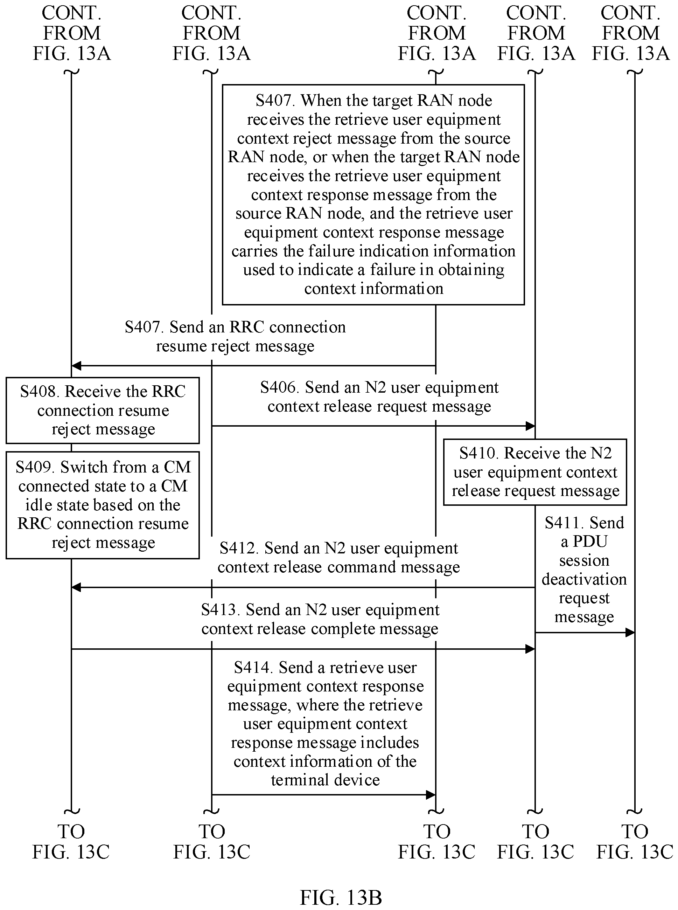

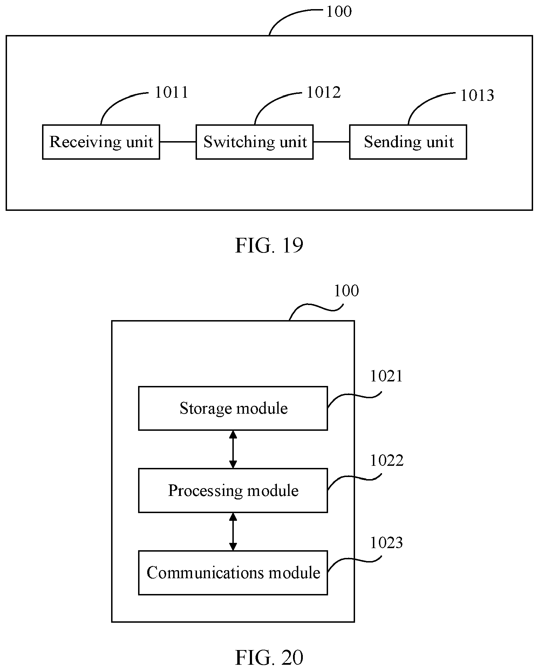

When the function modules corresponding to the functions are obtained through division, FIG. 19 is a possible schematic structural diagram of the terminal device in the foregoing embodiments. A terminal device 100 includes: a receiving unit 1011, a switching unit 1012, and a sending unit 1013. The receiving unit 1011 is configured to support the terminal device 100 in performing the process S110 in FIG. 3, the process S110 in FIG. 4B, the process S110 in FIG. 5B, the process S110 in FIG. 6B, the process S305 in FIG. 8, the process S408 in FIG. 9B, the process S408 in FIG. 10B, the process S408 in FIG. 12B, the process S408 in FIG. 13B, and the process S513 in FIG. 15B. The switching unit 1012 is configured to support the terminal device 100 in performing the process S101 in FIG. 3, the process S101 in FIG. 4A, the process S101 in FIG. 5A, the process S101 in FIG. 6A, the process S409 in FIG. 9B, the process S409 in FIG. 10B, the process S409 in FIG. 12B, the process S409 in FIG. 13B, the process S501 in FIG. 15A, and the process S707 in FIG. 18. The sending unit 1013 is configured to support the terminal device 100 in performing the process S102 in FIG. 3, the process S102 in FIG. 4A, the process S102 in FIG. 5A, the process S102 in FIG. 6A, the process S305 in FIG. 8, the processes S401, S413, and S421 in FIG. 9A to FIG. 9C, the processes S401, S413, and S421 in FIG. 10A to FIG. 10C, the processes S401, S413, and S421 in FIG. 12A to FIG. 12C, the processes S401, S413, and S421 in FIG. 13A to FIG. 13C, the process S502 in FIG. 15A, the processes S601 and S610 in FIG. 16A and FIG. 16B, the processes S601 and S610 in FIG. 17A and FIG. 17B, and the processes S701 and S710 in FIG. 18. All related content of the steps in the foregoing method embodiments may be cited in function descriptions of corresponding function modules, and details are not described herein again.

When the integrated unit is used, FIG. 20 is a possible schematic structural diagram of the terminal device in the foregoing embodiments. A terminal device 100 includes a processing module 1022 and a communications module 1023. The processing module 1022 is configured to control and manage actions of the terminal device 100. For example, the processing module 1022 is configured to support the terminal device 100 in performing the process S101 in FIG. 3, the process S101 in FIG. 4A, the process S101 in FIG. 5A, the process S101 in FIG. 6A, the process S409 in FIG. 9B, the process S409 in FIG. 10B, the process S409 in FIG. 12B, the process S409 in FIG. 13B, the process S501 in FIG. 15A, and the process S707 in FIG. 18. The communications module 1023 is configured to support communication between the terminal device and another entity, for example, communication with the function module or the network entity that is shown in FIG. 1. The terminal device 100 may further include a storage module 1021, configured to store program code and data of the terminal device.

The processing module 1022 may be a processor or a controller, such as a central processing unit (Central processing unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or a combination thereof. The processing module 1022 may implement or execute various examples of logical blocks, modules, and circuits described with reference to content disclosed in this application. The processor may alternatively be a combination of processors implementing a computing function, for example, a combination of one or more microprocessors, or a combination of the DSP and a microprocessor. The communications module 1023 may be a transceiver, a transceiver circuit, a communications interface, or the like. The storage module 1021 may be a memory.

Specifically, the processing module 1022 may be the processor 1001 in FIG. 2. The communications module 1023 may be the transceiver 1003 in FIG. 2. The storage module 1021 may be the memory 1002 in FIG. 2.

An embodiment of this application provides a RAN node, configured to perform the foregoing communication methods. In this embodiment of this application, the RAN node may be divided into function modules based on the foregoing method examples. For example, function modules corresponding to functions may be obtained through division, or two or more functions may be integrated into one processing module. The integrated module may be implemented in a form of hardware, or may be implemented in a form of a software function module. It should be noted that, in this embodiment of this application, module division is an example, and is merely logical function division. In an actual implementation, another division manner may be used.

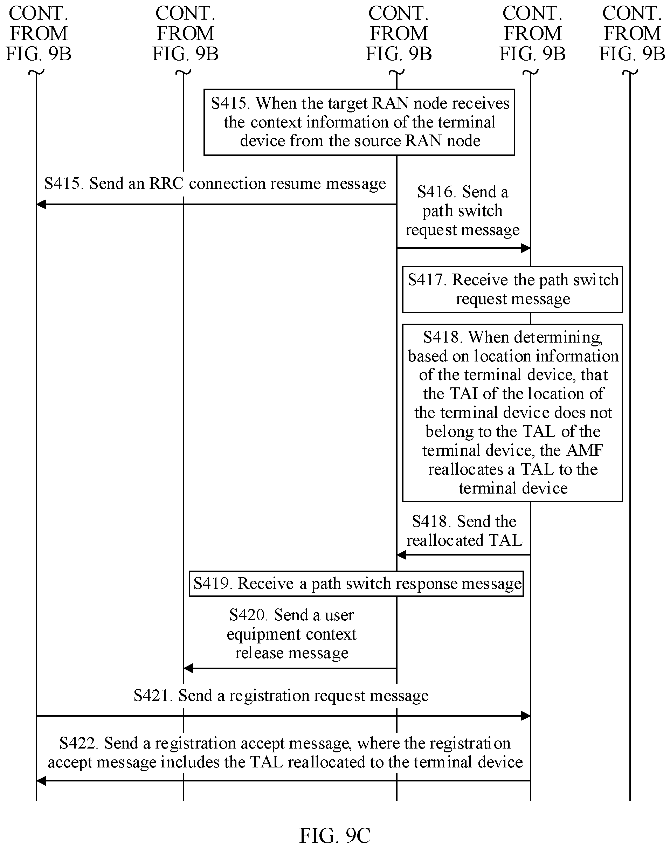

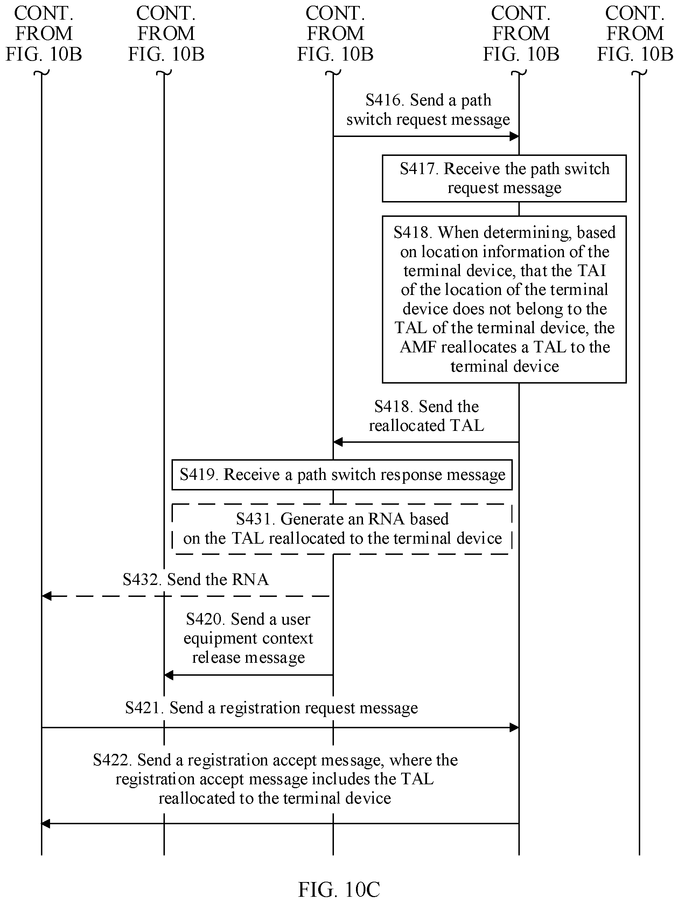

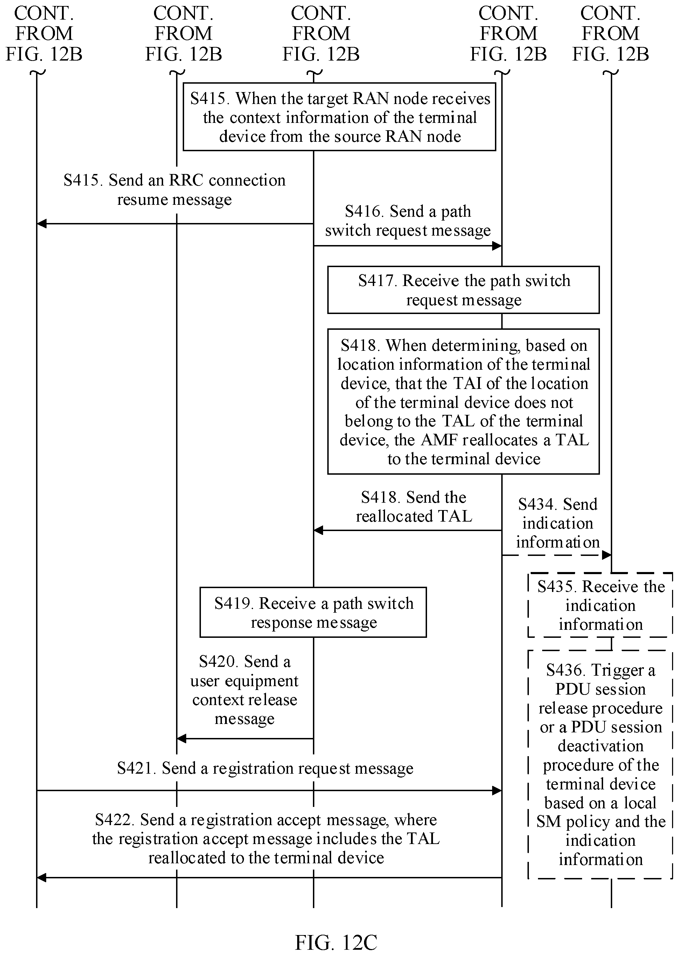

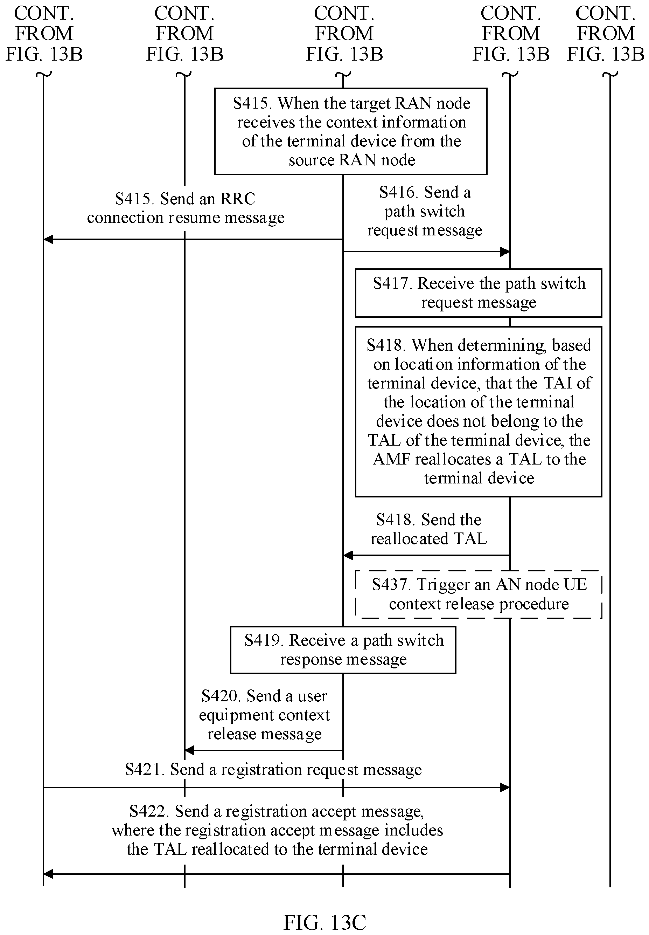

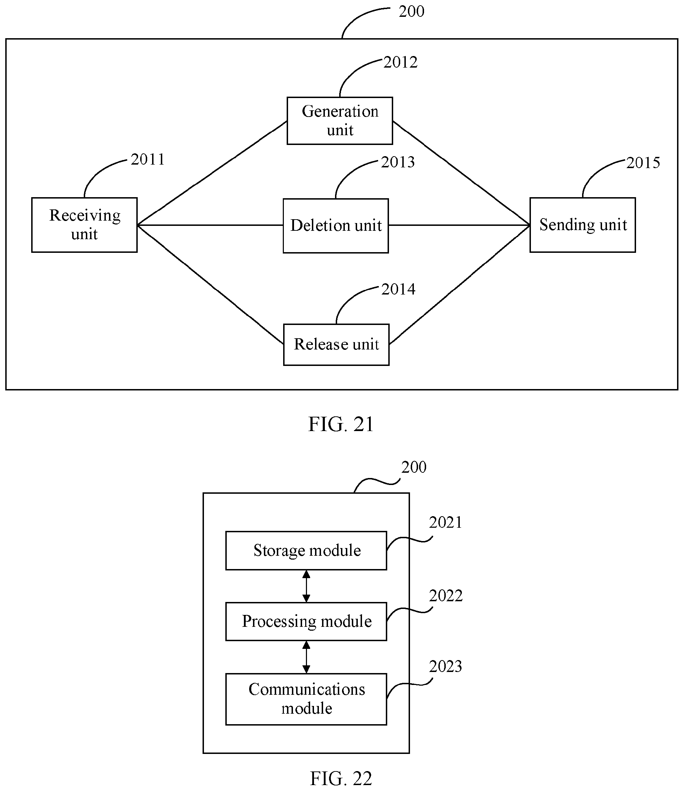

When the function modules corresponding to the functions are obtained through division, FIG. 21 is a possible schematic structural diagram of the RAN node in the foregoing embodiments. A RAN node 200 includes: a receiving unit 2011, a generation unit 2012, a deletion unit 2013, a release unit 2014, and a sending unit 2015. The receiving unit 2011 is configured to support the RAN node 200 in performing the process S105 in FIG. 3, the process S105 in FIG. 4B, the process S105 in FIG. 5B, the process S105 in FIG. 6B, the process S305 in FIG. 8, the processes S402, S404, and S419 in FIG. 9A and FIG. 9C, the processes S402, S404, and S419 in FIG. 10A and FIG. 10C, the processes S402, S404, and S419 in FIG. 12A and FIG. 12C, the processes S402, S404, and S419 in FIG. 13A and FIG. 13C, and the process S513 in FIG. 15B. The generation unit 2012 is configured to support the RAN node 200 in performing the process S431 in FIG. 10C and the process S621 in FIG. 17B. The deletion unit 2013 is configured to support the RAN node 200 in performing the process S106 in FIG. 3, the process S106 in FIG. 4B, the process S106 in FIG. 5B, the process S106 in FIG. 6B, and the process S510 in FIG. 15B. The release unit 2014 is configured to support the RAN node 200 in performing the process S4337 in FIG. 11 and the process S4376 in FIG. 14. The sending unit 2013 is configured to support the RAN node 200 in performing the process S107 in FIG. 3, the process S107 in FIG. 4B, the process S107 in FIG. 5B, the process S107 in FIG. 6B, the processes S305 and S306 in FIG. 8, the processes S403, S406, S407, S414, S415, and S420 in FIG. 9A to FIG. 9C, the processes S403, S406, S407, S414, S432, S433, S415, and S420 in FIG. 10A to FIG. 10C, the processes S4331 and S4337 in FIG. 11, the processes S403, S406, S407, S414, S415, and S420 in FIG. 12A to FIG. 12C, the processes S403, S406, S407, S414, S415, and S420 in FIG. 13A to FIG. 13C, the process S4376 in FIG. 14, the process S511 in FIG. 15B, the processes S602, S603, S604, S605, and S607 in FIG. 16A and FIG. 16B, the processes S602, S603, S604, S622, S605, and S621 in FIG. 17A and FIG. 17B, and the processes S702, S704, S705, and S706 in FIG. 18. All related content of the steps in the foregoing method embodiments may be cited in function descriptions of corresponding function modules, and details are not described herein again.

When the integrated unit is used, FIG. 22 is a possible schematic structural diagram of the RAN node in the foregoing embodiments. ARAN node 200 includes a processing module 2022 and a communications module 2023. The processing module 2022 is configured to control and manage actions of the RAN node 200. For example, the processing module 2022 is configured to support the RAN node 200 in performing the process S431 in FIG. 10C, the process S621 in FIG. 17B, the process S106 in FIG. 3, the process S106 in FIG. 4B, the process S106 in FIG. 5B, the process S106 in FIG. 6B, the process S510 in FIG. 15B, the process S4337 in FIG. 11, and the process S4376 in FIG. 14. The communications module 2023 is configured to support communication between the RAN node and another entity, for example, communication with the function module or the network entity that is shown in FIG. 1. The RAN node 200 may further include a storage module 2021, configured to store program code and data of the RAN node.

The processing module 2022 may be a processor or a controller, such as a central processing unit (Central processing unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or a combination thereof. The processing module 2022 may implement or execute various examples of logical blocks, modules, and circuits described with reference to content disclosed in this application. The processor may alternatively be a combination of processors implementing a computing function, for example, a combination of one or more microprocessors, or a combination of the DSP and a microprocessor. The communications module 2023 may be a transceiver, a transceiver circuit, a communications interface, or the like. The storage module 2021 may be a memory.

Specifically, the processing module 2022 may be the processor 2001 in FIG. 2. The communications module 2023 may be the transceiver 2003 or the network interface 2004 in FIG. 2. The storage module 2021 may be the memory 2002 in FIG. 2.

An embodiment of this application provides an AMF, configured to perform the foregoing communication methods. In this embodiment of this application, the AMF may be divided into function modules based on the foregoing method examples. For example, function modules corresponding to functions may be obtained through division, or two or more functions may be integrated into one processing module. The integrated module may be implemented in a form of hardware, or may be implemented in a form of a software function module. It should be noted that, in this embodiment of this application, module division is an example, and is merely logical function division. In an actual implementation, another division manner may be used.

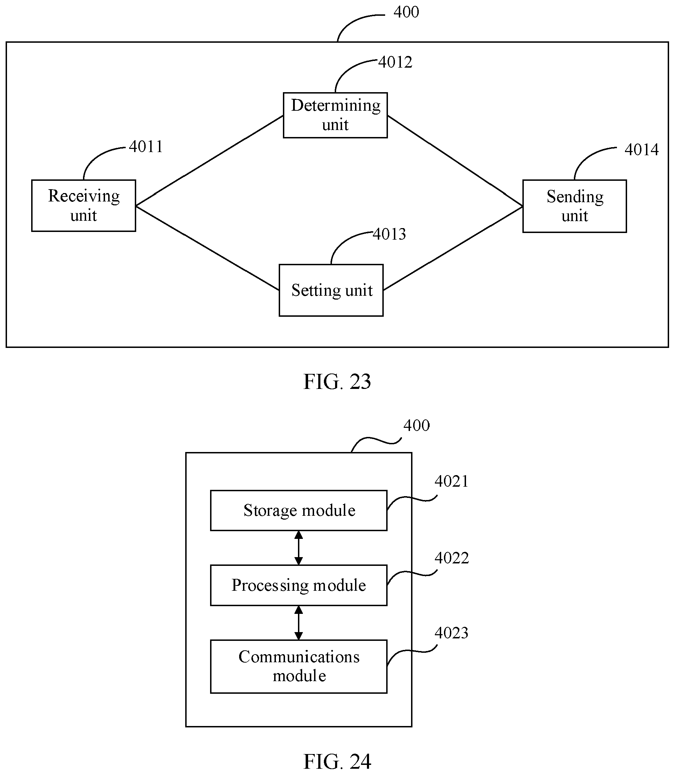

When the function modules corresponding to the functions are obtained through division, FIG. 23 is a possible schematic structural diagram of the AMF in the foregoing embodiments. An AMF 400 includes: a receiving unit 4011, a determining unit 4012, a setting unit 4013, and a sending unit 4014. The receiving unit 4011 is configured to support the AMF 400 in performing the processes S103 and S108 in FIG. 3, the processes S103, S121, and S108 in FIG. 4A and FIG. 4B, the processes S103, S121, and S108 in FIG. 5A and FIG. 5B, the processes S103, S121, and S108 in FIG. 6A and FIG. 6B, the processes S410 and S417 in FIG. 9B and FIG. 9C, the processes S410 and S417 in FIG. 10B and FIG. 10C, the processes S410 and S417 in FIG. 12B and FIG. 12C, the processes S410 and S417 in FIG. 13B and FIG. 13C, and the processes S503 and S512 in FIG. 15A and FIG. 15B. The determining unit 4012 is configured to support the AMF 400 in performing the process S122 in FIG. 4A, the process S122 in FIG. 5A, the process S122 in FIG. 6A, the process S418 in FIG. 9C, the process S504 in FIG. 15A, the process S606 in FIG. 16B, and the process S606 in FIG. 17B. The setting unit 4013 is configured to support the AMF 400 in performing the process S123 in FIG. 4B, the process S123 in FIG. 5B, and the process S123 in FIG. 6B. The sending unit 4013 is configured to support the AMF 400 in performing the process S104 in FIG. 3, the process S104 in FIG. 4A, the processes S104 and S131 in FIG. 5A and FIG. 5B, the processes S104 and S132 in FIG. 6A and FIG. 6B, the process S204 in FIG. 7, the processes S304 and S307 in FIG. 8, the processes S411, S412, S418, and S422 in FIG. 9B and FIG. 9C, the processes S411, S412, S418, and S422 in FIG. 10B and FIG. 10C, the processes S4332 and S4336 in FIG. 11, the processes S411, S412, S418, S422, and S434 in FIG. 12B and FIG. 12C, the processes S411, S412, S418, S422, and S437 in FIG. 13B and FIG. 13C, the processes S4371 and S4375 in FIG. 14, the processes S505, S506, S505, S509, and S512 in FIG. 15A and FIG. 15B, the processes S606, S608, and S611 in FIG. 16B, the processes S606, S608, S611, and S623 in FIG. 17B, and the processes S708 and S709 in FIG. 18. All related content of the steps in the foregoing method embodiments may be cited in function descriptions of corresponding function modules, and details are not described herein again.

When the integrated unit is used, FIG. 24 is a possible schematic structural diagram of the AMF in the foregoing embodiments. An AMF 400 includes a processing module 4022 and a communications module 4023. The processing module 4022 is configured to control and manage actions of the AMF 400. For example, the processing module 4022 is configured to support the AMF 400 in performing the process S122 in FIG. 4A, the process S122 in FIG. 5A, the process S122 in FIG. 6A, the process S418 in FIG. 9C, the process S504 in FIG. 15A, the process S606 in FIG. 16B, the process S606 in FIG. 17B, the process S123 in FIG. 4B, the process S123 in FIG. 5B, and the process S123 in FIG. 6B. The communications module 1023 is configured to support communication between the AMF and another entity, for example, communication with the function module or the network entity that is shown in FIG. 1. The AMF 400 may further include a storage module 4021, configured to store program code and data of the AMF.

The processing module 4022 may be a processor or a controller, such as a central processing unit (Central processing unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or a combination thereof. The processing module 4022 may implement or execute various examples of logical blocks, modules, and circuits described with reference to content disclosed in this application. The processor may alternatively be a combination of processors implementing a computing function, for example, a combination of one or more microprocessors, or a combination of the DSP and a microprocessor. The communications module 4023 may be a transceiver circuit, a communications interface, or the like. The storage module 4021 may be a memory.

Specifically, the processing module 4022 may be the processor 3001 in FIG. 2. The communications module 4023 may be the network interface 3003 in FIG. 2. The storage module 4021 may be the memory 3002 in FIG. 2.

An embodiment of this application provides an SMF, configured to perform the foregoing communication methods. In this embodiment of this application, the SMF may be divided into function modules based on the foregoing method examples. For example, function modules corresponding to functions may be obtained through division, or two or more functions may be integrated into one processing module. The integrated module may be implemented in a form of hardware, or may be implemented in a form of a software function module. It should be noted that, in this embodiment of this application, module division is an example, and is merely logical function division. In an actual implementation, another division manner may be used.

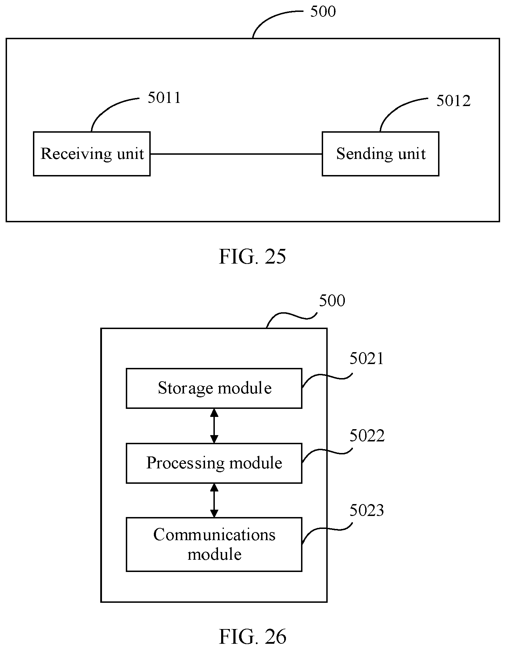

When the function modules corresponding to the functions are obtained through division, FIG. 25 is a possible schematic structural diagram of the SMF in the foregoing embodiments. An SMF 500 includes: a receiving unit 5011 and a sending unit 5012. The receiving unit 5011 is configured to support the SMF 500 in performing the process S133 in FIG. 6A, the process S435 in FIG. 12C, and the process S507 in FIG. 15A. The sending unit 5012 is configured to support the SMF 50 in performing the process S134 in FIG. 6B, the processes S201, S203, and S205 in FIG. 7, the processes S301 and S303 in FIG. 8, the process S436 in FIG. 12C, the processes S4372 and S4374 in FIG. 14, the process S508 in FIG. 15B, the process S609 in FIG. 16B, and the process S609 in FIG. 17B. All related content of the steps in the foregoing method embodiments may be cited in function descriptions of corresponding function modules, and details are not described herein again.

When the integrated unit is used, FIG. 26 is a possible schematic structural diagram of the SMF in the foregoing embodiments. An SMF 500 includes a processing module 5022 and a communications module 5023. The processing module 5022 is configured to control and manage actions of the SMF 500. The communications module 1023 is configured to support communication between the SMF and another entity, for example, communication with the function module or the network entity that is shown in FIG. 1. The SMF 500 may further include a storage module 5021, configured to store program code and data of the SMF

The processing module 5022 may be a processor or a controller, such as a central processing unit (Central processing unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or a combination thereof. The processing module 5022 may implement or execute various examples of logical blocks, modules, and circuits described with reference to content disclosed in this application. The processor may alternatively be a combination of processors implementing a computing function, for example, a combination of one or more microprocessors, or a combination of the DSP and a microprocessor. The communications module 5023 may be a transceiver circuit, a communications interface, or the like. The storage module 5021 may be a memory.

Specifically, the processing module 5022 may be the processor 3001 in FIG. 2. The communications module 5023 may be the network interface 3003 in FIG. 2. The storage module 5021 may be the memory 3002 in FIG. 2.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, device, and method may be implemented in other manners. For example, the foregoing device embodiments are merely examples. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

All or some of the foregoing embodiments may be implemented by software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on a computer, the procedures or functions according to the embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
when a TAI of a location of a terminal device in a radio resource control RRC-inactive state does not belong to a tracking area list TAL of the terminal device, switching, by the terminal device, to a connection management CM idle state;
sending, by the terminal device, a registration request message to an access and mobility management function AMF by using a target radio access network RAN node, wherein the registration request message is used to request to allocate a TAL to the terminal device; and
receiving, by the terminal device by using the target RAN node, a registration accept message sent by the AMF, wherein the registration accept message comprises the allocated TAL.

2. The method according to claim 1, wherein an area corresponding to the TAI of the location of the terminal device is a non-allowed area, and an area corresponding to the tracking area list TAL is an allowed area.

3. A communication method, comprising:
receiving, by an access and mobility management function AMF, a registration request message from a target radio access network RAN node, wherein the registration request message is used to request to allocate a tracking area list TAL to a terminal device, and the terminal device is in a radio resource control RRC-inactive state;
sending, by the AMF, an N2 user equipment context release command message to a source RAN node;
receiving, by the AMF, an N2 user equipment context release complete message sent by the source RAN node; and
sending, by the AMF, a registration accept message to the terminal device by using the target RAN node, wherein the registration accept message comprises the TAL.

4. The method according to claim 3, further comprising:
receiving, by the AMF, location information of the terminal device from the target RAN node;
determining, by the AMF based on the location information of the terminal device and a non-allowed area in a context of the terminal device, that the terminal device is located in the non-allowed area; and
setting, by the AMF, the terminal device to a connection management CM idle state.

5. The method according to claim 4, further comprising:
sending, by the AMF, a packet data unit PDU session deactivation request message to a session management function SMF, wherein the PDU session deactivation request message is used to request the SMF to deactivate a PDU session of the terminal device; or
sending, by the AMF, indication information to the SMF, wherein the indication information is used to indicate that the terminal device is located in the non-allowed area.

6. The method according to any one of claims 3 to 5, wherein the N2 user equipment context release command message comprises a release cause, and the release cause is used to indicate that the terminal device is located in the non-allowed area.

7. A communication method, comprising:
receiving, by a session management function SMF, indication information from an access and mobility management function AMF, wherein the indication information is used to indicate that a terminal device is located in a non-allowed area; and
triggering, by the SMF, a PDU session release procedure or a PDU session deactivation procedure of the terminal device based on a local session management SM policy and the indication information.

8. A communication method, comprising:
when a TAI of a location of a terminal device in a radio resource control RRC-inactive state does not belong to a tracking area list TAL of the terminal device, sending, by the terminal device, a radio resource control RRC connection resume request message to a target radio access network RAN node, wherein the terminal device is in the RRC-inactive state;
receiving, by the terminal device, an RRC connection resume reject message from the target RAN node; and
switching, by the terminal device, from a connection management CM connected state to a CM idle state based on the RRC connection resume reject message.

9. The method according to claim 8, wherein the target RAN node is located in a non-allowed area.

10. A communication method, comprising:
receiving, by a target radio access network RAN node, a radio resource control RRC connection resume request message from a terminal device, wherein the terminal device is in an RRC-inactive state;
sending, by the target RAN node, a retrieve user equipment context request message to a source RAN node, wherein the retrieve user equipment context request message is used to obtain context information of the terminal device; and
when the target RAN node receives the context information of the terminal device from the source RAN node, sending, by the target RAN node, an RRC connection resume message to the terminal device, sending a path switch request message to an access and mobility management function AMF, receiving a path switch response message from the AMF, and sending a user equipment context release message to the source RAN node; or
when the target RAN node receives a retrieve user equipment context reject message from the source RAN node, or when the target RAN node receives a retrieve user equipment context response message from the source RAN node, and the retrieve user equipment context response message carries failure indication information used to indicate a failure in obtaining the context information, sending, by the target RAN node, an RRC connection resume reject message to the terminal device.

11. The method according to claim 10, wherein the path switch response message comprises a tracking area list TAL reallocated to the terminal device, and the method further comprises:
generating, by the target RAN node, a RAN notification area RNA based on the TAL; and
sending, by the target RAN node, the RNA to the terminal device.

12. The method according to claim 10 or 11, wherein the target RAN node is located in a non-allowed area, and after the target RAN node receives the context information of the terminal device from the source RAN node, the method further comprises:
triggering, by the target RAN node, an access network AN node user equipment context release procedure; and
deleting, by the target RAN node, the context information of the terminal device.

13. A communication method, comprising:
receiving, by an access and mobility management function AMF, a path switch request message from a target radio access network RAN node, wherein the path switch request message carries location information of a terminal device;
determining, by the AMF based on the location information of the terminal device, that a TAI of a location of the terminal device does not belong to a tracking area list TAL of the terminal device; and
reallocating, by the AMF, a TAL to the terminal device, and sending the reallocated TAL to the target RAN node.

14. The method according to claim 13, wherein the sending the reallocated TAL to the target RAN node comprises:
sending, by the AMF, a path switch response message to the target RAN node, wherein the path switch response message comprises the reallocated TAL.

15. The method according to claim 13 or 14, further comprising:
when the target RAN node is located in a non-allowed area, sending, by the AMF, indication information to a session management function SMF, wherein the indication information is used to indicate that the terminal device is located in the non-allowed area; or
triggering, by the AMF, an access network AN node user equipment context release procedure.

16. A communication method, comprising:
receiving, by a source radio access network RAN node, a retrieve user equipment context request message from a target RAN node, wherein the retrieve user equipment context request message is used to obtain context information of a terminal device, and the terminal device is in a radio resource control RRC-inactive state;
when the target RAN node is located in a non-allowed area, sending, by the source RAN node, a retrieve user equipment context reject message to the target RAN node; or when the target RAN node is located in a non-allowed area, sending, by the source RAN node, a retrieve user equipment context response message to the target RAN node, wherein the retrieve user equipment context response message carries failure indication information, and the failure indication information is used to indicate a failure cause of obtaining the context information of the terminal device; and
sending, by the source RAN node, an N2 user equipment context release request message to an access and mobility management function AMF

17. The method according to claim 16, wherein the retrieve user equipment context reject message carries a reject cause, the reject cause is that the terminal device is located in the non-allowed area, the N2 user equipment context release request message carries a release request cause, and the release request cause is that the terminal device is located in the non-allowed area; or
the failure indication information is used to indicate that the terminal device is located in the non-allowed area, the N2 user equipment context release request message carries a release request cause, and the release request cause is that the terminal device is located in the non-allowed area.

18. A terminal device, comprising:
a switching unit, configured to: when a TAI of a location of the terminal device in a radio resource control RRC-inactive state does not belong to a tracking area list TAL of the terminal device, switch the terminal device to a connection management CM idle state;
a sending unit, configured to send a registration request message to an access and mobility management function AMF by using a target radio access network RAN node, wherein the registration request message is used to request to allocate a TAL to the terminal device; and
a receiving unit, configured to receive, by using the target RAN node, a registration accept message sent by the AMF, wherein the registration accept message comprises the allocated TAL.

19. The terminal device according to claim 18, wherein an area corresponding to the TAI of the location of the terminal device is a non-allowed area, and an area corresponding to the tracking area list TAL is an allowed area.

20. An access and mobility management function AMF, comprising:
a receiving unit, configured to receive a registration request message from a target radio access network RAN node, wherein the registration request message is used to request to allocate a tracking area list TAL to a terminal device, and the terminal device is in a radio resource control RRC-inactive state; and
a sending unit, configured to send an N2 user equipment context release command message to a source RAN node, wherein
the receiving unit is configured to receive an N2 user equipment context release complete message sent by the source RAN node; and
the sending unit is further configured to send a registration accept message to the terminal device by using the target RAN node, wherein the registration accept message comprises the TAL.

21. The AMF according to claim 20, wherein the AMF further comprises a determining unit and a setting unit;
the receiving unit is further configured to receive location information of the terminal device from the target RAN node;
the determining unit is further configured to determine, based on the location information of the terminal device and a non-allowed area in a context of the terminal device, that the terminal device is located in the non-allowed area; and
the setting unit is further configured to set the terminal device to a connection management CM idle state.

22. The AMF according to claim 21, wherein the sending unit is further configured to:
send a packet data unit PDU session deactivation request message to a session management function SMF, wherein the PDU session deactivation request message is used to request the SMF to deactivate a PDU session of the terminal device; or
send indication information to the SMF, wherein the indication information is used to indicate that the terminal device is located in the non-allowed area.

23. The AMF according to any one of claims 20 to 22, wherein the N2 user equipment context release command message comprises a release cause, and the release cause is used to indicate that the terminal device is located in the non-allowed area.

24. A session management function SMF, comprising:
a receiving unit, configured to receive indication information from an access and mobility management function AMF, wherein the indication information is used to indicate that a terminal device is located in a non-allowed area; and
a sending unit, configured to trigger a PDU session release procedure or a PDU session deactivation procedure of the terminal device based on a local session management SM policy and the indication information.

25. A terminal device, comprising:
a sending unit, configured to: when a TAI of a location of the terminal device in a radio resource control RRC-inactive state does not belong to a tracking area list TAL of the terminal device, send a radio resource control RRC connection resume request message to a target radio access network RAN node, wherein the terminal device is in the RRC-inactive state;
a receiving unit, configured to receive an RRC connection resume reject message from the target RAN node; and
a switching unit, configured to switch from a connection management CM connected state to a CM idle state based on the RRC connection resume reject message.

26. The terminal device according to claim 25, wherein the target RAN node is located in a non-allowed area.

27. A target radio access network RAN node, comprising:
a receiving unit, configured to receive a radio resource control RRC connection resume request message from a terminal device, wherein the terminal device is in an RRC-inactive state; and
a sending unit, configured to send a retrieve user equipment context request message to a source RAN node, wherein the retrieve user equipment context request message is used to obtain context information of the terminal device, wherein
when the target RAN node receives the context information of the terminal device from the source RAN node, the sending unit is further configured to send an RRC connection resume message to the terminal device, and send a path switch request message to an access and mobility management function AMF; the receiving unit is further configured to receive a path switch response message from the AMF; and the sending unit is further configured to send a user equipment context release message to the source RAN node; or
when the target RAN node receives a retrieve user equipment context reject message from the source RAN node, or when the target RAN node receives a retrieve user equipment context response message from the source RAN node, and the retrieve user equipment context response message carries failure indication information used to indicate a failure in obtaining the context information, the sending unit is further configured to send an RRC connection resume reject message to the terminal device.

28. The target RAN node according to claim 27, wherein the target RAN node further comprises a generation unit, and the path switch response message comprises a tracking area list TAL reallocated to the terminal device;
the generation unit is further configured to generate a RAN notification area RNA based on the TAL; and
the sending unit is further configured to send the RNA to the terminal device.

29. The target RAN node according to claim 27 or 28, wherein the target RAN node is located in a non-allowed area, the target RAN node further comprises a deletion unit, and after the target RAN node receives the context information of the terminal device from the source RAN node,
the sending unit is further configured to trigger an access network AN node user equipment context release procedure; and
the deletion unit is configured to delete the context information of the terminal device.

30. An access and mobility management function AMF, comprising:
a receiving unit, configured to receive a path switch request message from a target radio access network RAN node, wherein the path switch request message carries location information of a terminal device;
a determining unit, configured to determine, based on the location information of the terminal device, that a TAI of a location of the terminal device does not belong to a tracking area list TAL of the terminal device; and
a sending unit, configured to reallocate a TAL to the terminal device, and send the reallocated TAL to the target RAN node.

31. The AMF according to claim 30, wherein the sending unit is specifically configured to:
send a path switch response message to the target RAN node, wherein the path switch response message comprises the reallocated TAL.

32. The AMF according to claim 30 or 31, wherein the sending unit is further configured to:
when the target RAN node is located in a non-allowed area, send indication information to a session management function SMF, wherein the indication information is used to indicate that the terminal device is located in the non-allowed area; or
trigger an access network AN node user equipment context release procedure.

33. A source radio access network RAN node, comprising:
a receiving unit, configured to receive a retrieve user equipment context request message from a target RAN node, wherein the retrieve user equipment context request message is used to obtain context information of a terminal device, and the terminal device is in a radio resource control RRC-inactive state; and
a sending unit, configured to: when the target RAN node is located in a non-allowed area, send a retrieve user equipment context reject message to the target RAN node; or when the target RAN node is located in a non-allowed area, send a retrieve user equipment context response message to the target RAN node, wherein the retrieve user equipment context response message carries failure indication information, and the failure indication information is used to indicate a failure cause of obtaining the context information of the terminal device, wherein
the sending unit is further configured to send an N2 user equipment context release request message to an access and mobility management function AMF 34. The source RAN node according to claim 33, wherein the retrieve user equipment context reject message carries a reject cause, the reject cause is that the terminal device is located in the non-allowed area, the N2 user equipment context release request message carries a release request cause, and the release request cause is that the terminal device is located in the non-allowed area; or
the failure indication information is used to indicate that the terminal device is located in the non-allowed area, the N2 user equipment context release request message carries a release request cause, and the release request cause is that the terminal device is located in the non-allowed area.
